# EUROPÄISCHE PATENTANMELDUNG

(11) **EP 4 729 231 A1**
(43) Veröffentlichungstag der Anmeldung: **22.04.2026**
(21) Anmeldenummer: 25208927.1
(22) Anmeldetag: 15.10.2025
(51) Int. Cl.: B23Q 1/01, B23Q 3/155, B23Q 39/02

(54) **VORRICHTUNG UND VERFAHREN ZUM PROZESSIEREN VON WERKSTÜCKEN MIT EINER STATIONÄREN LAGERSTATION FÜR AGGREGATE ZUR PROZESSAUTOMATISIERUNG**

(30) Priorität: 21.10.2024 DE 102024130583
(71) Anmelder: Weinmann Holzbausystemtechnik GmbH, 72813 St. Johann (DE)
(72) Erfinder: van Aken, Benjamin, 72770 Reutlingen (DE); Wagner, Mathias, 71254 Ditzingen (DE)
(74) Vertreter: Dürr - Corporate IP

(57) **Zusammenfassung**

Die Erfindung betrifft eine Vorrichtung 10 zur Prozessierung von Werkstücken 80, insbesondere von Holzrahmenelementen oder dergleichen, umfassend eine in Längsrichtung der Vorrichtung 10 verfahrbare Bewegungseinheit 20 für ein Aggregat 50 zur Prozessautomatisierung, wobei die Vorrichtung 10 ferner eine insbesondere in Bezug auf die Längsrichtung der Vorrichtung 10 und eine zur Längsrichtung senkrechte Querrichtung der Vorrichtung 10 stationäre Lagerstation 40 mit einer Bereitstellungseinheit 42 zum Bereitstellen des Aggregats 50 zur Prozessautomatisierung umfasst, wobei die Bewegungseinheit 20 eine Aufnahmeeinheit 30 umfasst, und wobei die Bewegungseinheit 20 eingerichtet ist, eine vordefinierte Übergabeposition in Bezug zu der Lagerstation 40 einzunehmen und das Aggregat zur Prozessautomatisierung 50 mit der Aufnahmeeinheit 30 bevorzugt automatisiert aus der Lagerstation 40 aufzunehmen oder bevorzugt automatisiert in die Lagerstation 40 abzulegen. Die Erfindung betrifft ferner ein entsprechendes Verfahren zum Aufnehmen oder Ablegen eines Aggregats 50 zur Prozessautomatisierung einer Vorrichtung 10 zur Prozessierung von Werkstücken 80 aus einer Lagerstation 40 bzw. in die Lagerstation 40.

## Beschreibung

Die Erfindung betrifft eine Vorrichtung zur Prozessierung von Werkstücken nach dem Oberbegriff von Anspruch 1. Des Weiteren betrifft die Erfindung ein Verfahren zum Aufnehmen oder Ablegen eines Aggregats zur Prozessautomatisierung nach dem Oberbegriff von Anspruch 10.

Vorrichtungen dieser Art werden insbesondere im industriellen Fertighausbau verwendet. Im industriellen Fertighausbau werden Werkstücke, insbesondere Baumodule, in einer Produktionshalle maschinell vorgefertigt. Mit den Baumodulen werden dann Fertighäuser aufgebaut. Die maschinelle Vorfertigung der Baumodule in der Produktionshalle hat neben einer Zeitersparnis auf der Baustelle auch qualitative Vorteile. Die Baumodule sind bevorzugt Wandelemente und Dach-/Deckenelemente eines Fertighauses. Vorgefertigte Wandelemente und Dach-/Deckenelemente sind bevorzugt flache und längliche Holzrahmenelemente. An verschiedenen Stationen werden unterschiedliche Prozessschritte an den Holzrahmenelementen durchgeführt. Insbesondere werden verschiedene Plattenmaterialien mit Befestigungsmitteln auf einer hölzernen Unterkonstruktion befestigt. Ferner werden in die Plattenmaterialien Ausschnitte eingearbeitet, die beispielsweise für Fenster, Türen oder Steckdosen erforderlich sind. Die Prozessschritte werden heute entweder manuell von Zimmermännern oder von Bearbeitungsportalen mit Befestigungsaggregaten und Zerspanungswerkzeugen ausgeführt. Es ist üblich, dass eine Bearbeitungsspindel, welche am Bearbeitungsportal verfahrbar angeordnet ist, für spanende Bearbeitungen am Werkstück verwendet wird, wobei die Bearbeitungsspindel entweder mit einem Zerspanungswerkzeug dauerhaft gekoppelt ist oder die Bearbeitungsspindel verschiedene Zerspanungswerkzeuge mittels eines mitfahrenden Werkzeugwechslers ein- und auswechseln kann. Außerdem ist es bislang üblich, dass die verschiedenen Befestigungsaggregate mittels separaten Aufnahmeeinheiten jeweils verfahrbar aber manuell vom Bediener montiert am Bearbeitungsportal angeordnet sind. Die Befestigungsaggregate sind im Vergleich zu den Zerspanungswerkzeugen zum einen deutlich größer und zum anderen deutlich schwerer. Dadurch sind die Bearbeitungsportale insgesamt schwer und weniger agil beim Verfahren entlang des zu bearbeitenden Werkstückes. Ferner müssen die Bediener solcher Bearbeitungsvorrichtungen einzelne Befestigungsaggregate zum Beispiel zur Wartung oder zur Erneuerung manuell austauschen, wobei ein erhöhtes Fehlerpotenzial besteht. Insbesondere kann es passieren, dass entweder die falschen Befestigungsaggregate ein- oder ausgebaut werden oder die Befestigungsaggregate fehlerhaft am Bearbeitungsportal montiert werden. Ferner kann während des zum Teil zeitlich aufwendigen manuellen Austausches der Befestigungsaggregate keine Bearbeitung der Werkstücke stattfinden. Wegen des begrenzten Platzes am Bearbeitungsportal und auf Grund fehlender technischer Lösungen müssen bis heute viele Prozessschritte noch manuell vom Bediener ausgeführt werden.

Es ist daher eine Aufgabe der vorliegenden Erfindung, die bestehende Bearbeitung insbesondere von Holzrahmenwerken für den Fertighausbau im Hinblick auf eine zunehmende Automatisierung von Prozessschritten zu optimieren. Diese Aufgabe wird erfindungsgemäß gelöst durch eine Vorrichtung gemäß Anspruch 1 und ein Verfahren gemäß Anspruch 10.

Die erfindungsgemäße Vorrichtung zur Prozessierung von Werkstücken wie insbesondere Holzrahmenelementen umfasst eine in Längsrichtung der Vorrichtung verfahrbare Bewegungseinheit für ein Aggregat zur Prozessautomatisierung. Die Vorrichtung umfasst ferner eine Lagerstation mit einer Bereitstellungseinheit zum Bereitstellen des Aggregats zur Prozessautomatisierung. Die Lagerstation ist dabei bevorzugt in Bezug auf die Längsrichtung der Vorrichtung und eine zur Längsrichtung senkrechte Querrichtung der Vorrichtung stationär angeordnet. Die Bewegungseinheit umfasst eine Aufnahmeeinheit für das Aggregat zur Prozessautomatisierung und ist derart gestaltet, dass die Bewegungseinheit für einen Wechselvorgang eine vordefinierte Position in Bezug zu der Lagerstation einnehmen kann und bevorzugt automatisiert das Aggregat zur Prozessautomatisierung aus der Lagerstation in die Aufnahmeeinheit aufnehmen oder bevorzugt automatisiert von der Aufnahmeeinheit in die Lagerstation ablegen kann.

Unter der Lagerstation wird jegliches Magazin verstanden, in dem Aggregate zur Prozessautomatisierung gelagert werden kann. Unter der Bewegungseinheit wird jegliche bewegliche Struktur verstanden, die sich in Bezug zur Lagerstation bewegen kann. Als Aufnahmeeinheit ist jegliche Kopplungsvorrichtung zu verstehen, mit der das Aggregat zur Prozessautomatisierung an der Bewegungseinheit angekoppelt bzw. abgekoppelt werden kann. Als Aggregat zur Prozessautomatisierung ist jegliche Vorrichtung zu verstehen, die eine Schnittstelle zum Ankoppeln an die Aufnahmeeinheit, einen Rahmen und ein Gerät umfasst, dass in dem Rahmen bevorzugt entnehmbar befestigt ist. Das Gerät wird für eine bestimmte Funktionalität bzw. einen bestimmten Prozessschritt gewählt, der in Bezug auf das Werkstück ausgeführt werden soll. Zu den Funktionen bzw. Prozessschritten zählen z.B. Befestigen, Reinigen, Messen, Markieren aber auch Zerspanen, wobei das jeweilige Gerät für das Zerspanen einen eigenen Spindelantrieb umfasst.

Die Lagerstation umfasst mindestens eine Bereitstellungseinheit. In den Bereitstellungseinheiten der Lagerstation werden die zum Bearbeiten des Werkstücks notwendigen Aggregate zur Prozessautomatisierung zwischengelagert. Die Bereitstellungseinheiten der Lagerstation sind in Reichweite der Aufnahmeeinheit angeordnet. Die Bewegungseinheit bewegt sich zu der Lagerstation und nimmt mit Hilfe der Aufnahmeeinheit - soweit an der Aufnahmeeinheit noch ein Aufnahmeplatz frei ist - das für den nächsten Prozessschritt notwendige Aggregat zur Prozessautomatisierung bevorzugt automatisch aus der Lagerstation auf ohne das ein Bediener manuell eingreifen muss. Die Bewegungseinheit bewegt sich anschließend automatisch zum Werkstück und führt den nächsten notwendigen Prozessschritt mit dem soeben gekoppelten Aggregat zur Prozessautomatisierung aus. Nachdem der betreffende Prozessschritt ausgeführt wurde, ein noch nicht gekoppeltes Aggregat zur Prozessautomatisierung für den nächsten Prozessschritt benötigt wird und insbesondere an der Aufnahmeeinheit kein freier Platz für ein weiteres Aggregat zur Prozessautomatisierung zur Verfügung steht, bewegt sich die Bewegungseinheit automatisch wieder zu der Lagerstation hin und das Aggregat zur Prozessautomatisierung wird wieder in die Lagerstation abgelegt und ein anderes für den nächsten Prozessschritt benötigtes Aggregat zur Prozessautomatisierung wird neu aufgenommen.

Die Vorteile einer derartigen Vorrichtung sind, dass die Aggregate zur Prozessautomatisierung nicht alle an der Bewegungseinheit dauerhaft angeordnet sein müssen. Folglich reduziert sich das Gewicht der Bewegungseinheit und die Agilität der Bewegungseinheit wird gesteigert. In der Lagerstation bevorzugt in Bodennähe zwischengelagerte Aggregate zur Prozessautomatisierung können komfortabel durch Bedienpersonal gewartet werden, während zeitgleich das Werkstück durch die Bewegungseinheit prozessiert werden kann. Der automatische Austausch einzelner Aggregate zur Prozessautomatisierung verringert die Austauschzeit deutlich. Durch das Vorhalten der Aggregate zur Prozessautomatisierung in der Lagerstation steigert sich somit die Wartungsfreundlichkeit und die Effizienz. Ferner bietet die Lagerstation die Möglichkeit, dass deutlich mehr Prozessschritte mittels betreffender Aggregate automatisiert durchgeführt werden können und auch Platz für zukünftige neuartige Aggregate für neue Prozessschritte bereits vorhanden ist.

Die Werkstücke bestehen aus bevorzugt veredelten Rohmaterialien, die zu einem Holzrahmenelement zusammengefügt sind. Vorzugsweise sind die Werkstücke als Holztafelelemente oder Massivholzelemente ausgebildet. Die zu bearbeitenden Werkstücke befinden sich in einer bevorzugten Ausführungsform liegend auf einer Werkstückauflage der Vorrichtung, wobei die Werkstückauflage die Werkstücke für eine Prozessierung fixiert, und wobei die Werkstückauflage bevorzugt bezüglich der Längsrichtung und in der Querrichtung stationär auf dem Boden stehend angeordnet ist. Weiterhin möglich ist auch, dass die Werkstücke auf der Werkstückauflage in der Längsrichtung und/oder in der Querrichtung transportiert werden können. Außerdem ist möglich, dass die Werkstücke an der Werkstückauflage stehend angeordnet sind. Da auch mehrere Lagerstationen benachbart zu dem zu prozessierenden Werkstück positioniert werden können, wird hierdurch die Prozessierungsvielfalt bzw. die Flexibilität der Bewegungseinheit nochmal gesteigert. Es ist auch möglich, dass die Lagerstation an einer Decke oder an einer Wand stationär angeordnet ist.

Die Bewegungseinheit ist insbesondere ein Manipulator, welcher in einer bevorzugten Ausführungsform als bewegliches Portal oder als beweglicher Knickarmroboter ausgebildet ist. Das bewegliche Portal besteht im Wesentlichen aus einem horizontalen Führungsbalken und zwei vertikalen Stützen, wobei der horizontale Führungsbalken parallel zur Querrichtung ausgerichtet ist. Es ist naheliegend, dass die Bearbeitungsvorrichtung auch statt einer in Längsrichtung verfahrbaren Bewegungseinheit auch mehrere in Längsrichtung verfahrbare Bewegungseinheiten umfassen kann. Mehrere Bewegungseinheiten sind besonders vorteilhaft zum parallelen Prozessieren eines sehr großen insbesondere mehrere Meter sich in der Längsrichtung erstreckenden Werkstücks. Die Aufnahmeeinheit und das Aggregat zur Prozessautomatisierung sind bevorzugt mit Schnittstellen zur gegenseitigen Kopplung versehen.

Gemäß einer bevorzugten Ausführungsform umfasst die Vorrichtung eine Tragstruktur, die sich entlang der Längsrichtung der Vorrichtung erstreckt und an der die Bewegungseinheit zum Verfahren entlang der Tragstruktur beweglich gelagert ist. Die Aufnahmeeinheit ist an der Bewegungseinheit in der Querrichtung und in einer zur Längsrichtung und zur Querrichtung senkrechten Höhenrichtung in Bezug zur Lagerstation beweglich gelagert. Besonders bevorzugt ist dabei die Bewegungseinheit in Bezug zur Lagerstation entlang der Höhenrichtung automatisch verstellbar ausgestaltet. Die Tragstruktur ermöglicht eine präzise vordefinierte Verlagerung und Positionierung der Bewegungseinheit, um das Werkstück möglichst präzise an den vordefinierten Positionen zu prozessieren. Durch die Verstellbarkeit der Aufnahmeeinheit entlang der Bewegungseinheit in der Querrichtung und der Höhenrichtung wird ebenfalls eine präzise Positionierung des jeweiligen Aggregats zur Prozessautomatisierung erreicht.

Unter der Tragstruktur wird jegliches Tragsystem oder jegliche Tragkonstruktion verstanden, auf der sich die Bewegungseinheit in der Längsrichtung bewegen kann. Die Längsrichtung entspricht dabei der Erstreckungsrichtung der Tragstruktur. Die Tragstruktur ist bevorzugt parallel zu einer Seitenfläche des Werkstücks ausgerichtet. Mit einer derartigen Vorrichtung kann die Bewegungseinheit das an der Aufnahmeeinheit angebrachte Aggregat zur Prozessautomatisierung in der Längsrichtung und in der Querrichtung und in der Höhenrichtung bewegen. Es ergibt sich vorteilhaft, dass die Aufnahmeeinheit die Bereitstellungseinheiten der Lagerstation erreichen kann und die Aggregate zur Prozessautomatisierung aufnehmen oder ablegen kann. Ferner kann das an der Bewegungseinheit angeordnete Aggregat zur Prozessautomatisierung alle möglichen Punkte einer horizontalen Oberfläche eines Werkstücks sowie vertikaler Seitenflächen eines Werkstücks zur Prozessierung erreichen.

In einer bevorzugten Ausführungsform ist die Aufnahmeeinheit an einem sogenannten Aggregateträger angeordnet. Unter einem Aggregateträger wird jeglicher Aggregateschlitten verstanden, an dem die Aufnahmeeinheit angeordnet sein kann und mit dem die Aufnahmeeinheit in Querrichtung und in Höhenrichtung entlang der Bewegungseinheit verschoben werden kann.

In alternativen Ausführungsformen ist zumindest jener Teil der Bewegungseinheit, an dem die Aufnahmeeinheit angeordnet ist, in Bezug zur Lagerstation entlang einer Höhenrichtung entweder automatisch oder manuell verstellbar ausgestaltet. Mit einer automatischen Verstellbarkeit der Bewegungseinheit kann die Bewegungseinheit an unterschiedliche Höhenprofile des Werkstücks vor der Prozessierung des jeweiligen Werkstücks voreingestellt werden. Hierbei kann vorteilhaft der Abstand des Aggregats zur Prozessautomatisierung zum Werkstück in der Höhenrichtung klein gehalten werden und folglich eine Prozessierungsgeschwindigkeit gesteigert werden.

Gemäß einer bevorzugten Ausführungsform ist die Tragstruktur in Form zweier mit einem vordefinierten Abstand parallel in Längsrichtung verlaufender und ausgerichteter Fahrprofile ausgestaltet. Die Lagerstation ist dabei zumindest nach einer der folgenden Varianten angeordnet: In Längsrichtung überlappend mit den Fahrprofilen und/oder überlappend mit einer gedachten Verlängerung der Fahrprofile angeordnet, und/oder in Querrichtung überlappend mit mindestens einem Fahrprofil oder innerhalb der Fahrprofile oder außerhalb der Fahrprofile. Die verschiedenen Anordnungsvarianten erlauben es, die Bearbeitungsvorrichtung flexibel je nach Größe der Lagerstation und je nach Ausgestaltung der Bewegungseinheit beispielsweise als Portal oder Knickarmroboter zu gestalten. Wird beispielsweise eine sehr große Lagerstation mit vielen (d.h. mehr als 10) Bereitstellungseinheiten benötigt, so könnte die Lagerstation derart gestaltet und angeordnet sein, dass die Lagerstation sowohl in der Querrichtung beide Fahrprofile überlappt und in der Längsrichtung sowohl neben den Fahrprofilen als auch neben einer gedachten Verlängerung der Fahrprofile positioniert ist. Wird hingegen beispielsweise nur eine kleine Lagerstation mit wenigen (d.h. maximal 5) Bereitstellungeinheiten benötigt, so könnte die Lagerstation derart gestaltet und angeordnet sein, dass die Lagerstation in der Querrichtung nur eines der Fahrprofile überlappt und in der Längsrichtung nur neben der gedachten Verlängerung der Fahrprofile positioniert ist. Bei einer solchen kleinen Lagerstation und zwei Bewegungseinheiten in Form von zwei Knickarmrobotern auf je einem der Fahrprofile, könnte sich jener Knickarmroboter, der auf dem mit der Lagerstation überlappenden Fahrprofil angeordnet ist, maximal bis in die Nähe der Lagerstation bewegen, während der auf dem anderen Fahrprofil angeordnete Knickarmroboter über die Position der Lagerstation hinaus in der Längsrichtung verfahren werden kann. Die Anordnungsvarianten der Lagerstation ermöglichen es, ferner die Aggregate zur Prozessautomatisierung optimal bereitzustellen und die Positionierung der Aggregate zur Prozessautomatisierung in der Lagerstation auf kundenspezifische Anforderungen anzupassen.

Unter den zwei parallelen Fahrprofilen wird jegliches Schienensystem oder Führungssystem verstanden, auf dem sich die Bewegungseinheit bewegen kann und auf der die Bewegungseinheit geführt wird. Es ergibt sich vorteilhaft, dass die Bewegungseinheit in der Längsrichtung auf den Fahrprofilen nicht nur verfahren kann sondern auch geführt wird, sodass eine genaue und wiederholbare Positionierung der Bewegungseinheit in der Längsrichtung insbesondere in Bezug auf die Lagerstation ermöglicht wird.

Insbesondere sind die zwei parallelen Fahrprofile jeweils neben dem Werkstück angeordnet und verlaufen in Längsrichtung bevorzugt entlang der längsten Seitenfläche des Werkstücks. Es ergibt sich vorteilhaft, dass die Ausrichtung des beweglichen Portals in der Längsrichtung und in der Querrichtung mit der Ausrichtung des Werkstücks übereinstimmt. In einer weiteren Ausführungsform ist es vorteilhaft, jeweils einen Knickarmroboter auf einem der parallelen Fahrprofile zu führen.

Gemäß einer bevorzugten Ausführungsform weist die Lagerstation mit dem Aggregat zur Prozessautomatisierung in der Querrichtung ein oberes Höhenprofil auf. Die Bewegungseinheit mit dem Aggregat zur Prozessautomatisierung weist passend dazu in der Querrichtung ein unteres Höhenprofil auf, welches wenigstens abschnittsweise und bevorzugt komplett über dem Höhenprofil der Lagerstation liegt.

Das obere Höhenprofil der Lagerstation ist eine in Querrichtung verlaufende erste Profillinie, welche die obere Ausdehnung der Lagerstation in der Höhenrichtung widerspiegelt. Das untere Höhenprofil der Bewegungseinheit ist analog eine in Querrichtung verlaufende zweite Profillinie, wobei die zweite Profillinie entlang einer Unterkante der Bewegungseinheit verläuft und die untere Ausdehnung der Bewegungseinheit in der Höhenrichtung widerspiegelt. Mit einer derartigen Anordnung bzw. Ausgestaltung der Bewegungseinheit und der Lagerstation wird ermöglicht, dass sich die Bewegungseinheit in der Längsrichtung über die Lagerstation hinwegbewegen kann. Besonders vorteilhaft ist eine derartige Anordnung, wenn zwei in Längsrichtung nebeneinander angeordnete Werkstücke von einer Bewegungseinheit prozessiert werden sollen. Die Lagerstation wird in diesem Fall zwischen den zwei Werkstücken angeordnet, wobei die Bewegungseinheit mit mindestens einem Aggregat zur Prozessautomatisierung beide Werkstücke zur Prozessierung erreichen kann und bei Bedarf das mindestens eine Aggregat zur Prozessautomatisierung an der Lagerstation gegen mindestens ein anderes Aggregat zur Prozessautomatisierung austauschen kann.

Gemäß einer weiteren bevorzugten Ausführungsform umfasst die Vorrichtung ferner eine Werkstückauflage, wobei oberhalb der Werkstückauflage ein Prozessierungsraum für ein auf der Werkstückauflage angeordnetes zu prozessierendes Werkstück vorgesehen ist. Der Prozessierungsraum weist in der Querrichtung ein oberes Höhenprofil auf. Die Lagerstation mit mindestens einem Aggregat zur Prozessautomatisierung weist analog in der Querrichtung ein unteres Höhenprofil auf, welches gemäß der bevorzugten Ausführungsform wenigstens abschnittsweise bzw. weiter bevorzugt über die komplette Querrichtung des Prozessierungsraum der Werkstückauflage über dem oberen Höhenprofil des Prozessierungsraums angeordnet ist.

Das untere Höhenprofil der Lagerstation ist eine in der Querrichtung verlaufende dritte Profillinie, wobei die dritte Profillinie entlang einer Unterkante der Lagerstation verläuft. Das obere Höhenprofil des Prozessierungsraums der Werkstückauflage ist eine in der Querrichtung verlaufende vierte Profillinie, welche die obere Ausdehnung des Prozessierungsraums in der Höhenrichtung widerspiegelt. Der Prozessierungsraum ist ein Raum in den insbesondere ein in vertikaler Richtung größtmögliches Werkstück passt.

Mit einer derartigen Anordnung und Ausgestaltung der Werkstückauflage inklusive der zuvor definierten Werkstückdimensionen und der Lagerstation wird ermöglicht, dass entweder nur das Werkstück oder die Werkstückauflage mit dem Werkstück unter der Lagerstation hindurchtransportiert werden kann bzw. können. Besonders vorteilhaft ist eine derartige Anordnung bei längeren Produktionslinien, wobei ein Werkstück von einer Vorrichtung zur Prozessierung von Werkstücken zu einer nächsten Vorrichtung zur Prozessierung von Werkstücken transportiert wird. In einer derartigen Produktionslinie können mehrere Bewegungseinheiten und mehrere Lagerstationen in Längsrichtung hintereinander angeordnet sein, wobei die einzelnen Bewegungseinheiten nur einen begrenzten Fahrbereich haben und nur eine Lagerstation bzw. nur eine begrenzte Anzahl der installierten Lagerstationen erreichen können. Insbesondere bei zeitlich schnell getakteten Produktionslinien mit großen Produktionsmengen ist eine derartige Anordnung und Ausgestaltung der Vorrichtung bestehend aus mindestens einer Werkstückauflage und mindestens einer Lagerstation sinnvoll.

Gemäß einer bevorzugten Ausführungsform weist die Lagerstation zumindest eine Bereitstellungseinheit und zumindest eine weitere Bereitstellungseinheit auf. Die zumindest eine Bereitstellungseinheit und die zumindest eine weitere Bereitstellungseinheit sind in der Querrichtung voneinander beabstandet.

Unter dem Begriff Bereitstellungseinheit wird jeglicher Lagerplatz verstanden, in dem mindestens ein Aggregat zur Prozessautomatisierung bereitgestellt werden kann. Die Bereitstellungseinheiten sind bevorzugt in Querrichtung nebeneinander in einer Linie aufgereiht und voneinander beabstandet und befinden sich in Reichweite der Aufnahmeeinheit. Bei einer größeren Lagerstation sind die Bereitstellungseinheiten bevorzugt in zwei oder mehr als zwei parallelen in der Querrichtung verlaufenden Linien angeordnet. Die Bewegungseinheit kann mit der in Querrichtung und Höhenrichtung beweglichen Aufnahmeeinheit Aggregate zur Prozessautomatisierung aus den Bereitstellungseinheiten aufnehmen und/oder ablegen.

Eine derartige Anordnung der Bereitstellungseinheiten ist insbesondere beim Wechsel mehrerer Aggregate zur Prozessautomatisierung bei einem Wechselvorgang vorteilhaft, da zum Aufnehmen und/oder zum Ablegen der Aggregate zur Prozessautomatisierung keine zusätzliche Bewegung der Bewegungseinheit in der Längsrichtung notwendig ist. Ein weiterer Vorteil ist, dass die Lagerstation mit den Bereitstellungseinheiten somit möglichst platzsparend zwischen zwei Werkstückauflagen angeordnet werden kann.

In einer weiteren bevorzugten Ausführungsform sind die zumindest eine Bereitstellungseinheit und zumindest eine weitere Bereitstellungseinheit gemeinsam oder einzeln in der Höhenrichtung verstellbar ausgestaltet, um das Aufnehmen und das Ablegen der Aggregate zur Prozessautomatisierung durch die Aufnahmeeinheit zu erleichtern. Bei einer Längenausbreitung der Vorrichtung in der Querrichtung von beispielsweise 6000 mm können bevorzugt bis zu sechs Bereitstellungseinheiten für Aggregate zur Prozessautomatisierung mit verschiedenen Prozessfunktionalitäten in der Querrichtung nebeneinander angeordnet werden, um ein großes Spektrum an Prozessierungsvorgängen am Werkstück zu ermöglichen.

Gemäß einer bevorzugten Ausführungsform weist das Aggregat zur Prozessautomatisierung eine Lagerungseinrichtung auf, die bevorzugt als Aufhängevorrichtung ausgestaltet ist, um das Aggregat in der Lagerstation zu lagern bzw. bevorzugt aufzuhängen. Die Bereitstellungseinheit weist entsprechend mindestens eine Aufnahmeeinrichtung für die Lagerungseinrichtung auf. Unter der Lagerungseinrichtung wird jegliche technische Vorrichtung verstanden, mit der das Aggregat zur Prozessautomatisierung an der Bereitstellungseinheit lagerbar bzw. vorübergehend ablegbar ist. Unter der Aufnahmeeinrichtung wird jegliche technische Einrichtung zum Aufnehmen eines Aggregats zur Prozessautomatisierung verstanden.

In einer ersten Ausführungsform sind die Lagerungseinrichtung und die Aufnahmeeinrichtung für jeweils einen bestimmten Typ von Aggregat zur Prozessautomatisierung charakteristisch gestaltet, so dass jeder Lagerplatz in der Lagerstation jeweils für einen bestimmten Typ von Aggregat zur Prozessautomatisierung vordefiniert ist und die Bewegungseinheit den betreffenden Typ von Aggregat zur Prozessautomatisierung jeweils am gleichen Lagerplatz abholen und ablegen muss. Somit ist dem Bediener der Vorrichtung, der ein gewisses Aggregat zur Prozessautomatisierung warten möchte, von vornherein bekannt, wo der Bediener das betreffende Aggregat zur Prozessautomatisierung in der Lagerstation finden kann. Ferner kann in diesem Fall die jeweilige Lagerungseinrichtung und Aufnahmeeinrichtung an das Gewicht und die Größe des jeweiligen Aggregats zur Prozessautomatisierung angepasst sein, um Kosten und Material zu sparen, weil nicht alle Lagerungseinrichtungen und Aufnahmeeinrichtungen für das größte bzw. schwerste Aggregat zur Prozessautomatisierung ausgelegt sein müssen.

In einer zweiten Ausführungsform sind die mindestens eine Aufnahmeeinrichtung und Lagerungseinrichtungen für verschiedene Typen von Aggregaten zur Prozessautomatisierung einheitlich ausgebildet. Somit sind die Lagerungseinrichtungen der Aggregate zur Prozessautomatisierung und die Aufnahmeeinheiten der Lagerstation standardisiert ausgebildet, so dass die Vorrichtung ein Aggregat zur Prozessautomatisierung jeweils an einem beliebigen freien Lagerplatz ablegen kann, der möglichst schnell erreicht werden kann, was die Bearbeitungsdauer der Werkstücke mit der Vorrichtung reduziert.

Ferner weist in einer besonderen Ausführungsform eine Bereitstellungseinheit zwei Aufnahmeeinrichtungen für zwei Aggregate zur Prozessautomatisierung auf, so dass bei der Herstellung der Lagerstation Material eingespart werden kann und damit die Herstellungskosten sinken. Auch der Platzbedarf in der Lagerstation für die Lagerung von zwei Aggregaten zur Prozessautomatisierung ist geringer.

Besonders bevorzugt ist die Aufnahmeeinrichtung als eine Dreipunktaufnahme ausgebildet, die das Aggregat zur Prozessautomatisierung positionsgetreu aufnehmen kann.

Gemäß einer bevorzugten Ausführungsform umfasst das Aggregat zur Prozessautomatisierung eine erste Einheit zur Prozessierung des Werkstücks, beispielsweise eine erste Einheit zur Bearbeitung des Werkstücks, und eine zweite Einheit zur Prozessierung des Werkstücks, beispielsweise eine Einheit zur Vermessung des Werkstücks, zur Markierung des Werkstücks oder zur Reinigung des Werkstücks. Damit können Lagerungsplätze an der Lagerstation eingespart werden, weil nicht ein erster Lagerungsplatz für ein erstes Aggregat zur Prozessautomatisierung mit der ersten Einheit und ein zweiter separater Lagerungsplatz für ein zweites Aggregat zur Prozessautomatisierung mit der zweiten Einheit vorgehalten werden muss. Ferner kann bei der UND-Variante Zeit für das ansonsten notwendige Wechseln der Aggregate zur Prozessautomatisierung an der Lagerstation eingespart werden und somit der gesamte Bearbeitungsvorgang mit der Vorrichtung beschleunigt werden.

Die erste Einheit zur Prozessierung und die zweite Einheit zur Prozessierung sind aus der folgenden Gruppe ausgewählt: Befestigungseinheit, Klebeeinheit, Fräseinheit, Sägeeinheit, Bohreinheit, Reinigungseinheit, Markierungseinheit, Sensor- bzw. Vermessungseinheit.

Unter einer Sensor- bzw. Vermessungseinheit wird jegliche technische Einrichtung verstanden, welche mit dem Werkstück berührungsbehaftet oder berührungslos (z.B. per Laser) in Kontakt tritt, und an dem Werkstück eine Vermessung oder Überprüfung vornimmt, z.B. ob ein Nagel nur teilweise oder komplett eingetrieben wurde oder ob ein Nagel an der vordefinierten Stelle eingetrieben wurde.

Bevorzugt ist bzw. sind die erste Einheit zur Prozessierung und/oder die zweite Einheit zur Prozessierung an einem Aggregatehalter des Aggregats zur Prozessautomatisierung höhenverstellbar und/oder auswechselbar befestigt. Die höhenverstellbare und/oder auswechselbare Befestigung am Aggregatehalter eignet sich besonders, um unterschiedliche Einheiten mit unterschiedlichen Ausdehnungen in der vertikalen Richtung im Befestigungsaggregat aufnehmen zu können.

Gemäß einer bevorzugten Ausführungsform ist das Aggregat zur Prozessautomatisierung drehbar an der Aufnahmeeinheit gelagert. Insbesondere ist das Aggregat zur Prozessautomatisierung um eine vertikal verlaufende Achse derart drehbar gelagert, sodass ein vordefinierter Raumbereich, in dem das Werkstück durch eine aktuelle Position und Ausrichtung des Aggregats zur Prozessautomatisierung prozessiert werden soll, unverändert bleibt. Unter einem vordefinierten Raumbereich, in dem das Werkstück prozessiert werden soll, wird ein Bereich verstanden, in dem beispielsweise das Werkzeug mit dem Werkstück in Kontakt tritt oder in dem das Befestigungsmittel der Befestigungseinheit auf das Werkstück trifft oder in dem Messignale einer Sensoreinheit auf das Werkstück treffen.

Mit einer derartigen Aufnahmeeinheit wird das Aggregat zur Prozessautomatisierung, bevorzugt ein Klammergerät, um eine vertikale und zur Höhenrichtung parallele Achse gedreht. Klammern des Klammergeräts können somit in unterschiedlichen Winkeln zwischen einem Klammersteg der Klammern und z.B. der Längsrichtung in das Werkstück eingetrieben werden. Der Klammersteg ist die Drahtbrücke zwischen den beiden in das Werkstück einzutreibenden Drahtenden der jeweiligen Klammer.

Besonders vorteilhaft ist die Drehung um die vertikale Achse, wenn insbesondere Drahtenden einer Heftklammer des Klammergeräts in unterschiedliche Faserverläufe eines bevorzugt hölzernen Werkstücks eingetrieben werden sollen, sodass eine Haltekraft des Befestigungsmittels verbessert wird. Vorteilhaft ist außerdem, dass sich ein vordefinierter Raumbereich, welcher der Position einer Austrittsmündung des Klammergeräts entspricht, durch die Drehung um die vertikale Achse nicht verändert und ein Nachjustieren der Position des Klammergeräts durch die Steuereinheit entfallen kann. Dazu wird die vertikale Drehachse derart angeordnet, dass eine gedachte Verlängerung der Drehachse sich mit dem vordefinierten Raumbereich überlappt.

Weiter bevorzugt ist das Aggregat zur Prozessautomatisierung um eine horizontale Achse drehbar gelagert. Eine derartige Gestaltung der Aufnahmeeinheit ist besonders vorteilhaft, um insbesondere Nagelgeräte um eine horizontale und zur Querrichtung parallele Achse drehen zu können, sodass Befestigungsmittel des Nagelgeräts in unterschiedlichen Winkeln in das Werkstück eintreibbar sind. Besonders vorteilhaft ist die Drehung um die horizontale Achse, wenn plattenförmige Bauteile auf Holzbalken einer hölzernen Unterkonstruktion befestigt werden sollen, wobei insbesondere ein vertikales Eintreiben von Befestigungsmitteln in der Nähe von Plattenstößen der plattenförmigen Bauteile ungünstig ist. Insbesondere ist das vertikale Eintreiben ungünstig, wenn die Holzbalken der hölzernen Unterkonstruktion schmal ausgebildet sind, wobei die Holzbalken beispielsweise eine Breite von 38 mm haben. Die Plattenstöße verlaufen mittig entlang des Holzbalkens, wobei neben den Plattenstößen nur geringfügig Platz vorhanden ist, um ein Befestigungsmittel vertikal einzutreiben. Deswegen werden insbesondere Nägel mit einem um die horizontale Achse gekippten Aggregat zur Prozessautomatisierung schräg eingetrieben, um sicher zu gewährleisten, dass der Nagel das plattenförmige Bauteil mit dem Holzbalken verbindet, wobei der Nagel vollständig in den Holzbalken eingetrieben wird. Das der eingetrieben Nagel den Holzbalken verfehlt, wird somit vermieden.

Gemäß einer bevorzugten Ausführungsform ist bzw. sind die Bereitstellungseinheit und/oder die Aufnahmeeinheit durch je einen manuellen, halbautomatisch oder vollautomatischen Einstellmechanismus in der Höhenrichtung und/oder in der Querrichtung und/oder in der Längsrichtung und/oder um die Höhenrichtung und/oder um die Querrichtung und/oder um die Längsrichtung verstellbar. Mit einem solchen Einstellmechanismus ist bzw. sind die Bereitstellungseinheit und/oder die Aufnahmeeinheit flexibel räumlich auch zueinander ausrichtbar. Vorteilhaft können die Bereitstellungseinheit und die Aufnahmeeinheit durch den Einstellmechanismus aufeinander abgestimmt und ausgerichtet werden, sodass die Aggregate zur Prozessautomatisierung von der Aufnahmeeinheit störungsfrei gekoppelt werden können.

In einer weiteren bevorzugten Ausführungsform umfasst die Vorrichtung zum Verfahren und Positionieren der Bewegungseinheit relativ zu der Lagerstation einen Omega-Antrieb. Ein solcher Antrieb erlaubt insbesondere eine hohe Positionier- und Wiederholgenauigkeit, so dass die Aggregate zur Prozessautomatisierung auch bei längerem Betrieb der Vorrichtung störungsfrei aus der Lagerstation aufgenommen und in die Lagerstation wieder abgelegt werden können.

Die Erfindung betrifft ferner ein Verfahren zum Aufnehmen oder Ablegen eines Aggregats zur Prozessautomatisierung aus einer Lagerstation (40) bzw. in die Lagerstation (40), insbesondere bei einer in den vorherigen Abschnitten beschriebenen Vorrichtung zur Prozessierung von Werkstücken sein. Das Verfahren umfasst die folgenden Schritte:
- Durchführen einer ersten Relativbewegung in der Längsrichtung zwischen einer Bewegungseinheit und der Lagerstation zum Erreichen einer vordefinierten Übergabeposition, und/oder
- Durchführen einer zweiten Relativbewegung in der Querrichtung zwischen der Bewegungseinheit und der Lagerstation zum Erreichen der vordefinierten Übergabeposition, und/oder
- Durchführen einer dritten Relativbewegung in einer Höhenrichtung zwischen der Bewegungseinheit und der Lagerstation zum Erreichen der vordefinierten Übergabeposition, und
- Aufnehmen oder Ablegen des Aggregats zur Prozessautomatisierung an der Bewegungseinheit oder in die Lagerstation in der Übergabeposition.

Gemäß einer weiteren bevorzugten Ausführungsform des Verfahrens umfasst das Verfahren die folgenden weiteren Schritte:
- Durchführen einer ersten Relativbewegung in der Längsrichtung zwischen der Bewegungseinheit und dem Werkstück zum Erreichen einer Bearbeitungsposition, und/oder
- Durchführen einer zweiten Relativbewegung in der Querrichtung zwischen der Aufnahmeeinheit und dem Werkstück zum Erreichen der Bearbeitungsposition, und/oder
- Durchführen einer dritten Relativbewegung in der Höhenrichtung zwischen der Aufnahmeeinheit und dem Werkstück zum Erreichen der Bearbeitungsposition, und
- Prozessieren des Werkstücks an der Prozessierungsposition durch das Aggregat zur Prozessautomatisierung

Gemäß einer weiteren bevorzugten Ausführungsform des Verfahrens werden die erste Relativbewegung in der Längsrichtung zwischen der Bewegungseinheit und der Lagerstation und die zweiten Relativbewegung in der Querrichtung zwischen der Aufnahmeeinheit und der Lagerstation gleichzeitig ausgeführt. Oder die erste Relativbewegung in der Längsrichtung zwischen der Bewegungseinheit und der Lagerstation und die zweiten Relativbewegung in der Querrichtung zwischen der Aufnahmeeinheit und der Lagerstation und die dritte Relativbewegung in der Höhenrichtung zwischen der Aufnahmeeinheit und der Lagerstation werden gleichzeitig ausgeführt. Durch das gleichzeitige Ausführen der Relativbewegungen für einen Wechselvorgang an der Lagerstation ergibt sich durch Zeitersparnis eine Effizienzsteigerung bei der Bearbeitung von Werkstücken. Alternativ können die Relativbewegungen auch nacheinander ausgeführt werden.

Gemäß einer weiteren bevorzugten Ausführungsform des Verfahrens wird die erste Relativbewegung in der Längsrichtung zwischen der Bewegungseinheit und der Lagerstation derart ausgeführt, sodass die Bewegungseinheit über die Lagerstation hinwegfahren kann. Dadurch kann die Lagerstation an beliebigen Positionen entlang des Verfahrwegs der Bewegungseinheit positioniert werden und die Bewegungseinheit wird hierdurch in Ihrer Bewegung nicht beschränkt.

Nach einer ersten besonders bevorzugten Ausführungsform fährt eine Werkstückauflage mit einem auf der Werkstückauflage angeordneten und insbesondere von der Bearbeitungsvorrichtung fertig bearbeiteten Werkstück unter der Lagerstation hindurch. Nach einer zweiten besonders bevorzugten Ausführungsform wird das Werkstück mit einer auf der Werkstückauflage angeordneten Transportsystem unter der Lagerstation hindurchtransportiert, wobei die Werkstückauflage selbst in Bezug zur Lagerstation stationär ist.

Ein solcher Verfahrensschritt erlaubt es die Lagerstation auf dem Verfahrweg der Werkstückauflage oder auf dem Transportweg des Werkstücks zu platzieren ohne das die Lagerstation ein Hindernis für eine Bewegung der Werkstückauflage und/oder des Werkstücks darstellt.

Gemäß einer weiteren bevorzugten Ausführungsform des Verfahrens werden mehrere Aggregate zur Prozessautomatisierung während eines Wechselvorgang gleichzeitig oder sequenziell aus der Lagerstation aufgenommen oder abgelegt. Durch das gleichzeitige oder sequenzielle Aufnehmen oder Ablegen der Aggregate zur Prozessautomatisierung während eines Wechselvorgangs ergibt sich aufgrund einer Zeitersparnis eine Effizienzsteigerung, weil nach dem Wechselvorgang mehrere Prozessierungsschritte an dem Werkstück vorgenommen werden können, bevor für weitere Prozessierungsschritte ein erneuter Wechselvorgang initiieren werden muss.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und sind derart dargestellt, dass die erfindungsgemäßen Besonderheiten deutlich sichtbar gemacht werden können. Die einzelnen beschriebenen Merkmale können je einzeln für sich oder zu mehreren in beliebigen Kombinationen bei verschiedenen Ausführungsbeispielen der Erfindung verwirklicht sein.

Bevorzugte Ausführungsbeispiele der Erfindung sind in den Figuren der Zeichnung dargestellt und werden in der nachfolgenden Beschreibung näher erläutert, wobei sich gleiche Bezugszeichen auf gleiche oder ähnliche oder funktional gleiche Vorrichtungskomponenten oder Verfahrensschritte beziehen.

Es zeigen:
Fig. 1: Eine Prinzipskizze einer Ausführungsform einer Vorrichtung zur Prozessierung von Werkstücken
Fig. 2: Eine detaillierte Perspektivansicht einer Ausführungsform einer Bereitstellungseinheit
Fig. 3: Eine detaillierte Perspektivansicht einer Ausführungsform eines Aggregats zur Prozessautomatisierung
Fig. 4: Eine detaillierte Perspektivansicht einer Ausführungsform einer Aufnahmeeinheit
Fig. 5: Eine detaillierte Perspektivansicht einer Ausführungsform eines Aggregateträgers
Fig. 6: Eine Prinzipskizze einer Ausführungsform einer Bewegungseinheit und einer Lagerstation
Fig. 7: Eine Prinzipskizze einer weiteren Ausführungsform einer Bewegungseinheit, einer Werkstückauflage und einer Lagerstation
Fig. 8a - Fig. 8c: Drei Prinzipskizzen mit möglichen Anordnungsschemata der Lagerstation innerhalb der Vorrichtung zur Prozessierung von Werkstücken in Bezug auf ein Fahrprofil
Fig. 9a - 9b: Zwei Prinzipskizzen einer Ausführungsform eines Antriebseinheit der Bewegungseinheit
Fig. 10: Zeigt ein schematisches Ablaufdiagramm eines Verfahrens zum Aufnehmen oder Ablegen eines Aggregats zur Prozessautomatisierung aus einer Lagerstation bzw. in die Lagerstation

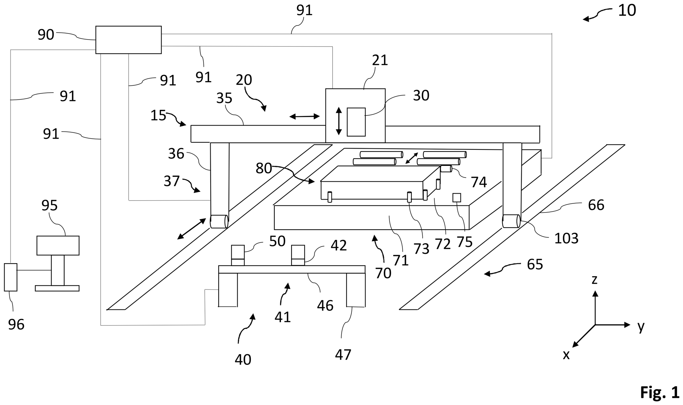

Fig. 1 zeigt eine von zwei bevorzugten Ausführungsformen einer Vorrichtung 10 zur Prozessierung von Werkstücken 80. Die Vorrichtung 10 umfasst die folgenden Hauptkomponenten: eine Bewegungseinheit 20 in Form eines Bearbeitungsportals, eine Lagerstation 40, eine Tragstruktur 65 für die Bewegungseinheit 20, bevorzugt eine Werkstückauflage 70 für die Werkstücke 80 und eine Steuereinheit 90 zum Steuern der Bewegungseinheit 20, der Lagerstation 40 und der Werkstückauflage 70. In einer zweiten nicht dargestellten bevorzugten Ausführungsform einer weiteren Vorrichtung zur Prozessierung von Werkstücken wird als Bewegungseinheit anstelle des Bearbeitungsportals ein Knickarmroboter bzw. werden zwei Knickarmroboter auf je einer Schiene der Tragstruktur 65 eingesetzt.

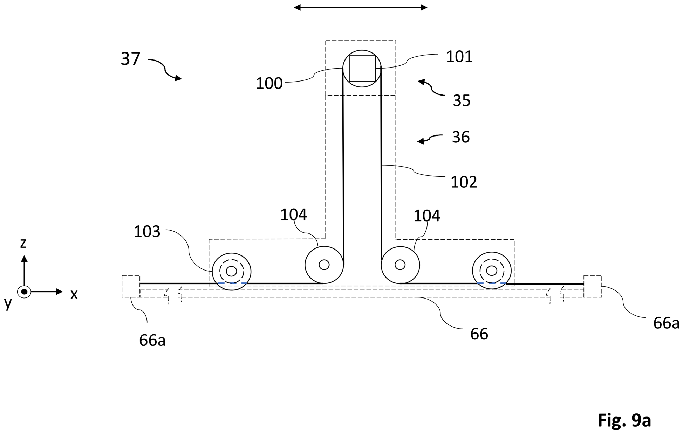

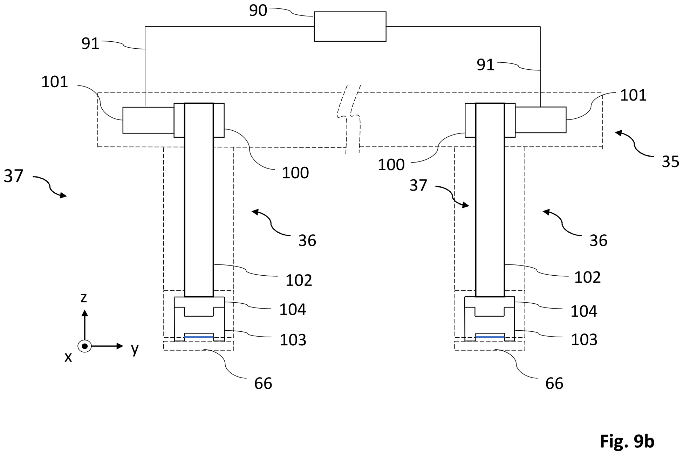

Die in Fig. 1 dargestellte Bewegungseinheit 20 ist in x-Richtung (entspricht der Längsrichtung) auf parallelen Fahrprofilen 66 der Tragstruktur 65 verfahrbar angeordnet. Die Bewegungseinheit 20 ist bevorzugt als portalförmige Grundstruktur 15 aufgebaut, wobei die portalförmige Grundstruktur 15 im Wesentlichen einen sich in y-Richtung (entspricht der Querrichtung) erstreckenden Führungsbalken 35 und zwei sich in z-Richtung (entspricht der Höhenrichtung) erstreckende Stützen 36 aufweist, an deren unteren Ende jeweils Bewegungsmittel 103 (siehe auch Fig. 9a/9b) wie beispielsweise je ein Rad oder bevorzugt je eine Rolle zum Abrollen auf der Tragstruktur 65 angeordnet sind. Die portalförmige Grundstruktur 15 erstreckt sich in der Höhenrichtung bevorzugt im Bereich von 1700 mm - 2000 mm, in der Längsrichtung bevorzugt im Bereich von 1700 mm - 2000 mm und in der Querrichtung bevorzugt im Bereich von 4500 mm - 6200 mm. Der Vorschub der Bewegungseinheit 20 in der Längsrichtung erfolgt über eine Antriebseinheit 37, wobei diese in Bezug zur Fig. 9 näher beschrieben ist. An dem Führungsbalken 35 ist ein oder sind bevorzugt auch zwei Aggregateträger 21 in der Querrichtung beweglich gelagert angeordnet, wobei wiederum an dem einen Aggregateträger 21 mindestens eine Aufnahmeeinheit 30 zur Aufnahme eines Aggregats 50 zur Prozessautomatisierung angeordnet ist. Die Aufnahmeeinheit 30 ist eine Kopplungsvorrichtung zum Koppeln des Aggregats 50. Die Aufnahmeeinheit 30 zur Aufnahme des Aggregats 50 ist an dem Aggregateträger 21 in der Höhenrichtung beweglich angeordnet. An dem quaderförmigen Führungsbalken 35 ist ein Führungssystem angeordnet, wobei der eine Aggregateträger 21 über zumindest eine Führungsschiene und weiter bevorzugt über zwei parallele übereinander angeordnete Führungsschienen des Führungssystems in der Querrichtung beweglich gelagert ist. Die beiden Führungsschienen des Führungssystems sind bevorzugt auf einer langen und vertikal ausgerichteten Fläche des quaderförmigen Führungsbalkens 35 angeordnet und liegen somit in der gleichen z-y-Ebene. Bevorzugt sind die beiden Führungsschienen des Führungssystems im Bereich von 200 mm - 300 mm beabstandet. Die portalförmige Grundstruktur 15 ist derart ausgebildet, dass die Bewegungseinheit 20 über die Werkstückauflage 70 mit einem darauf befindlichen Werkstück 80 verfahrbar ist und derart, dass die nach oben gerichtete horizontale Oberfläche des Werkstücks 80 einer Prozessierung unterzogen werden kann und bevorzugt auch die vertikalen Seitenflächen des Werkstücks 80 durch die Bewegungseinheit 20 einer Prozessierung unterzogen werden können. Mit Prozessierung ist beispielsweise ein Befestigungsverfahren, ein Bearbeitungsverfahren wie ein Zerspanungsverfahren, ein Reinigungsverfahren, ein Markierungsverfahren oder ein Vermessungs- bzw. Überprüfungsverfahren gemeint.

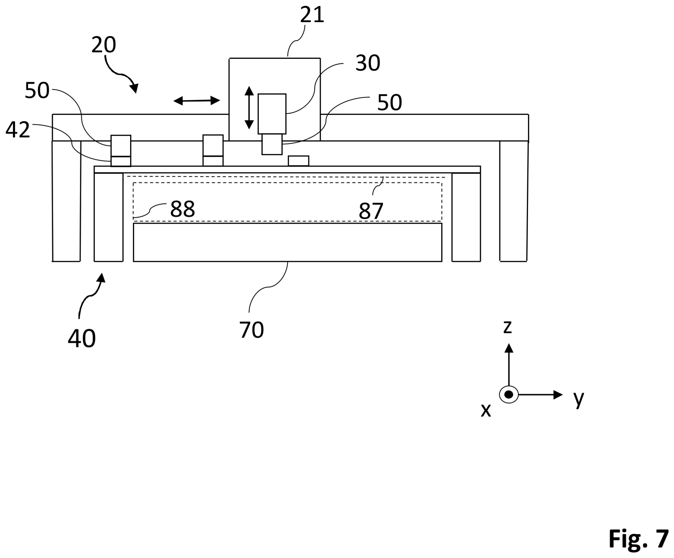

In der dargestellten Ausführungsform ragt der Führungsbalken 35 in der Querrichtung über die beiden Stützen 36 hinaus, sodass die Aufnahmeeinheit 30 mit dem Aggregat 50 in der Querrichtung einen maximalen Bewegungsspielraum innerhalb eines Prozessierungsraums 88 (siehe Fig. 7) hat und somit die gesamte nach oben gerichtete horizontale Oberfläche des Werkstücks 80 und bevorzugt auch die vertikalen Seitenflächen des Werkstücks 80 einer Prozessierung unterzogen werden können. Die portalförmige Grundstruktur 15 der Bewegungseinheit 20 kann in einer bevorzugten Ausführungsform derart ausgestaltet sein, dass der Führungsbalken 35 entlang der Höhenrichtung manuell oder motorisch verstellbar ist, wobei dies insbesondere vorteilhaft ist, wenn die Bewegungseinheit 20 unterschiedlich hohe Werkstücke 80 überfährt. Die Stützen 36 könnten in diesem Fall teleskopartig ein- und ausfahrbar gestaltet sein und den Führungsbalken 35 somit in der Höhenrichtung verschieben. Eine Handkurbel mit Zahnradgetriebe oder ein Motor mit Zahnradgetriebe könnten einen Antrieb eines derartigen Mechanismus darstellen, wobei der Antrieb an einer Stütze 36 angeordnet sein könnte. Über eine Zahnstange, in die das Zahnradgetriebe der Handkurbel oder des Motors eingreift, werden die teleskopartigen Stützen 36 eingefahren oder ausgefahren.

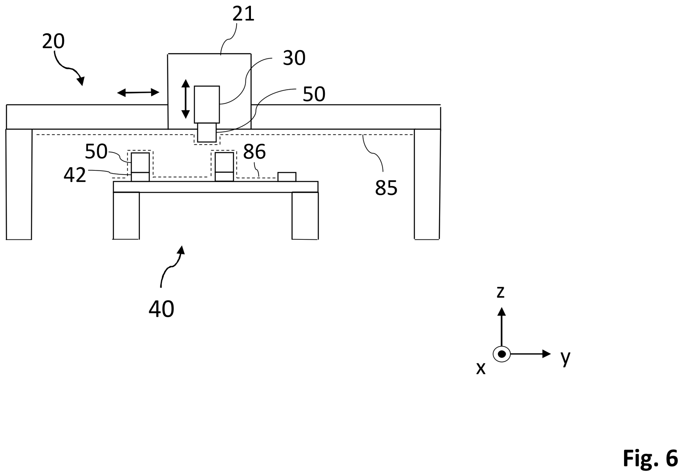

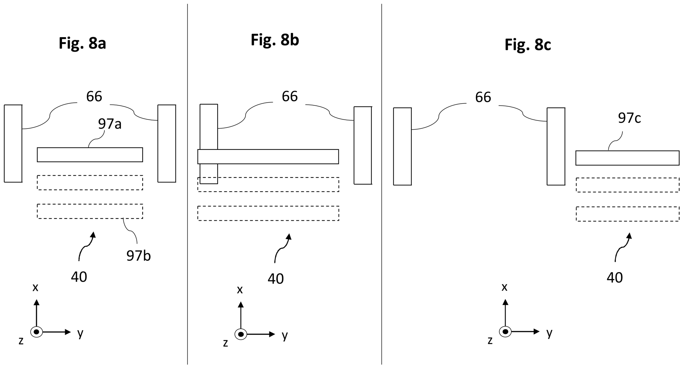

Die in Fig. 1 dargestellte Lagerstation 40 mit einer Bereitstellungseinheit 42, ist in der dargestellten Ausführungsform in der Längsrichtung neben den Fahrprofilen 66 und in Querrichtung innerhalb der Fahrprofile 66 angeordnet. Weitere Varianten für eine Anordnung der Lagerstation 40 in Bezug auf die Tragstruktur 65 sind in Fig. 8 dargestellt. Die Lagerstation 40 ist in der dargestellten Ausführungsform stationär auf dem Boden stehend angeordnet. Die Lagerstation 40 ist bevorzugt als portalförmige Grundstruktur 41 aufgebaut, wobei die portalförmige Grundstruktur 41 im Wesentlichen einen sich in der Querrichtung erstreckenden Querträger 46 und zwei sich in der Höhenrichtung erstreckende und auf dem Boden angeordnete Ständer 47 aufweist. Die Bereitstellungseinheit 42 ist bevorzugt am Querträger 46 angeordnet, wobei auch zwei (siehe Fig. 1) oder mehr Bereitstellungseinheiten 42 am Querträger 46 angeordnet sein können. An dem Querträger 46 der portalförmige Grundstruktur 41 sind mehrere Schnittstellen für Bereitstellungseinheiten 42 vorgesehen, wobei die Schnittstellen in der Querrichtung entlang des Querträgers 46 angeordnet sind. Die Schnittstellen für Bereitstellungseinheiten 42 sind in einem Abstand von bevorzugt 100 mm nebeneinander angeordnet. Die Bereitstellungseinheiten 42 sind bevorzugt lösbar an den Schnittstellen des Querträgers 46 angeordnet und können je nach kundenspezifischen Anforderungen am Querträger 46 verteilt werden. Die portalförmige Grundstruktur 41 der Lagerstation 40 ist in einer bevorzugten Ausführungsform formsteif ausgebildet, um ein positionsgetreues Bereitstellen des Aggregats 50 zu gewährleisten. Die Lagerstation 40 mit dem Aggregat 50 kann unterschiedliche Höhenprofile in der Querrichtung aufweisen, wobei die Lagerstation 40 bevorzugt ein erstes oder ein zweites Höhenprofil aufweist. Bei dem ersten Höhenprofil ist die Lagerstation 40 derart ausgestaltet, sodass sich eine Unterkante des Querträgers 46 der portalförmige Grundstruktur 41 in der Höhenrichtung bevorzugt im Bereich von 500 mm - 600 mm über Bodenniveau befindet (siehe Fig. 6). Beim zweiten Höhenprofil ist die Lagerstation 40 derart ausgestaltet, sodass sich die Unterkante des Querträgers 46 der portalförmige Grundstruktur 41 in der Höhenrichtung bevorzugt im Bereich von 1250 mm - 1350 mm über Bodenniveau befindet (siehe Fig. 7). Die genannten Höhenprofile werden in der Beschreibung zu den Figuren 6 und 7 nochmal genauer erläutert. Ferner erstreckt sich die portalförmige Grundstruktur 41 in der Längsrichtung bevorzugt im Bereich von 500 mm - 1000 mm und in der Querrichtung bevorzugt im Bereich von 2000 mm - 3500 mm.

Die in Fig. 1 dargestellt Werkstückauflage 70 besteht im Wesentlichen aus einer sich horizontal entlang der Längsrichtung und der Querrichtung erstreckenden und auf dem Boden angeordneten Basis 71 und aus einer Auflagefläche 72, auf die das zu bearbeitende Werkstück 80 auflegbar ist. Die Werkstückauflage 70 erstreckt sich in der Höhenrichtung bevorzugt im Bereich von 600 mm - 700 mm, in der Längsrichtung bevorzugt im Bereich von 3000 mm - 10000 mm und in der Querrichtung bevorzugt im Bereich von 3500 mm - 4000 mm. An der Auflagefläche 72 ist bevorzugt ein Spannsystem 73 zum Verspannen des Werkstücks 80 angeordnet, wobei das Spannsystem 73 bevorzugt mehrere, in der Höhenrichtung verfahrbare und in der Längs- und Querrichtung verstellbare Bolzen aufweist. Durch die Verstellbarkeit der Bolzen in der Längs- und Querrichtung und die Verstellbarkeit der Bolzen in der Höhenrichtung sind unterschiedlich große Werkstücke 80 auf der Werkstückauflage 70 verspannbar. Die Bolzen verspannen das Werkstück 80 auf der Werkstückauflage 70, sodass das Werkstück 80 durch die Vorrichtung 10 mit dem Aggregat 50 mit einer vordefinierten Präzision prozessierbar ist. Beispielsweise ist eine Bearbeitungspräzision oder Befestigungspräzision in einem Bereich von +/- 1,5 mm vordefiniert. Des Weiteren ist an der Auflagefläche 72 bevorzugt ein Transportsystem 74 angeordnet, wobei durch das Transportsystem 74 das Werkstück 80 in der Längsrichtung und bevorzugt auch in der Querrichtung auf der Werkstückauflage 70 transportierbar ist. Eine weitere Möglichkeit das Werkstück 80 in der Längsrichtung und in der Querrichtung zu transportieren ist, dass die Werkstückauflage 70 auf Fahrprofilen beweglich gelagert ist und das Werkstück 80 auf der Auflagefläche 72 durch das Spannsystem 73 fest verspannt ist. Hierfür wird an der Werkstückauflage 70 ein Antrieb angeordnet, wobei an der Werkstückauflage 70 von dem Antrieb angetriebene Räder zur Bewegung der Werkstückauflage 70 in der Längsrichtung und/oder der Querrichtung angeordnet sind.

Die in Fig. 1 dargestellte Tragstruktur 65 besteht in einer bevorzugten Ausführungsform aus zwei parallel verlaufenden, in Längsrichtung ausgerichteten und auf dem Boden angeordneten Fahrprofilen 66 wie zum Beispiel zwei Schienen. Die Bewegungsmittel 103, die am unteren Ende der Stützen 36 angeordnet sind und auf den Schienen abrollen, sind derart geformt, sodass die Bewegungseinheit 20 auf den Schienen geführt wird. Jede der beiden Schienen umfasst bevorzugt eine langgezogene Trägerplatte, zwei langgezogene vierkant Profilstäbe und eine Vielzahl an Befestigungsplatten. Auf der Unterseite der langgezogenen Trägerplatte sind die Befestigungsplatten bevorzugt verscheißt, wobei die Befestigungsplatten an den äußeren Enden Bohrungen für Bodenanker aufweisen, sodass die Schienen auf einer ebenen Fläche befestigt werden können. Die Befestigungsplatten sind parallel und gleichmäßig voneinander beabstandet an der Unterseite der Trägerplatte angeordnet. Auf der Oberseite der Trägerplatte sind die zwei langgezogenen vierkant Profile parallel nebeneinander angeordnet. Bevorzugt sind die zwei langgezogenen vierkant Profile verschweißt, wobei die zwei langgezogenen vierkant Profile bevorzugt symmetrisch zu einer Längsachse der langgezogenen Trägerplatte verschweißt sind, sodass die Bewegungsmittel 103 der Bewegungseinheit 20 auf den zwei vierkant Profilen abrollen können. **In** einer besonderen Ausführungsform können die Schienen auch an einer Decke einer Industriehalle angeordnet sein, sodass die Bewegungseinheit 20 an der Decke verfahren könnte.

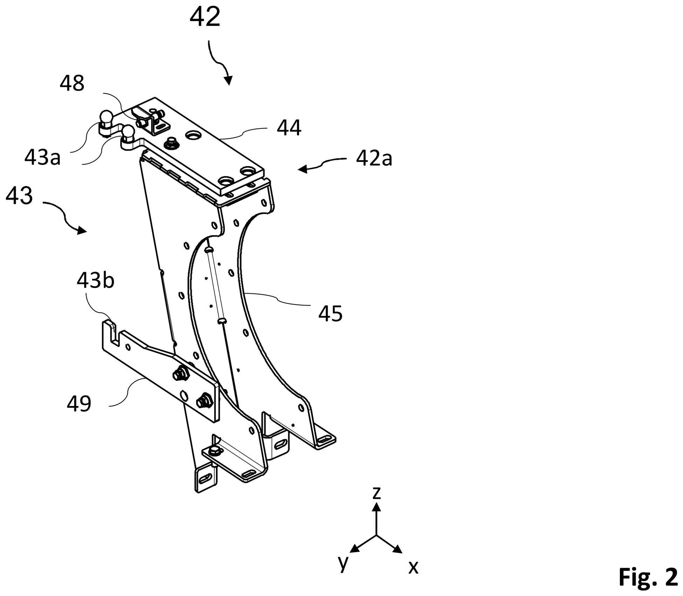

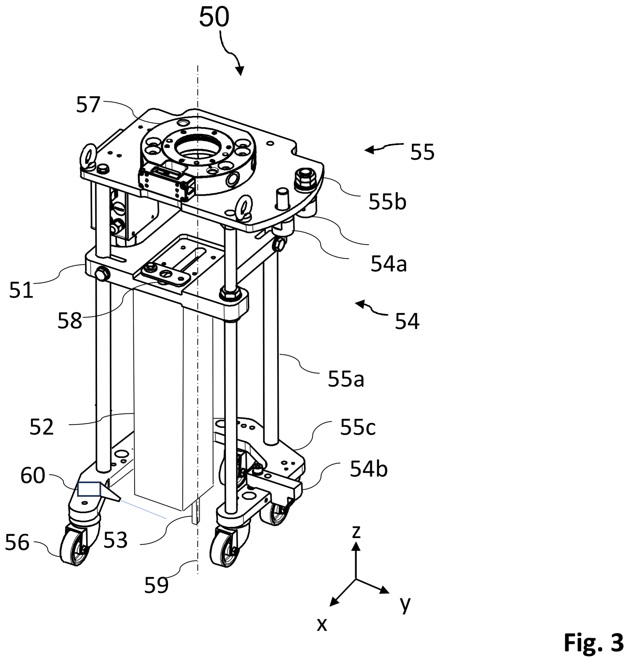

Die Steuereinheit 90 ermöglicht einen halbautomatischen oder bevorzugt vollautomatischen Betrieb der Vorrichtung 10. An die Steuereinheit 90 sind diverse Komponenten der Vorrichtung 10 über Steuer- und/oder Signalleitungen angebunden. Die Steuereinheit 90 steuert beispielsweise Aktuatoren der Bewegungseinheit 20 und der Werkstückauflage 70. Die Steuereinheit 90 ermöglicht ferner bevorzugt einen Informationsaustausch zwischen der Bewegungseinheit 20, der Werkstückauflage 70 und der Lagerstation 40 anhand von Sensordaten. Sensoren, die an den Aktuatoren der Vorrichtung 10 verbaut sind, liefern Positionsdaten der Aktuatoren an die Steuereinheit 90. Ein an der Auflagefläche 72 der Werkstückauflage 70 verbautes Messsystem 75 liefert Positionsdaten des Werkstücks 80 an die Steuereinheit 90. Ein weiterer Sensor 60 am Aggregat 50 überprüft den Abstand zwischen dem Werkstück 80 und einer am Aggregat 50 angeordneten Einheit 52 (siehe Fig. 3) zur Prozessierung des Werkstücks 80 wie beispielsweise Befestigen, Zerspanen (Fräsen, Bohren), Reinigen, Markieren, Messen. Ferner überprüft bevorzugt ein weiterer Sensor 48 (siehe Fig. 2) an der Bereitstellungseinheit 42 der Lagerstation 40, ob ein Aggregat 50 von der Aufnahmeeinheit 30 aufgenommen werden kann oder ob die Bereitstellungseinheit 42 bereits belegt ist. Die Steuereinheit 90 vergleicht die Ist-Daten der verbauten Sensoren mit den Soll-Daten eines Bearbeitungsprogramms und koordiniert auf dieser Datenbasis die weiteren Bearbeitungsschritte, wobei insbesondere die Steuereinheit 90 ein voll automatisiertes Bearbeitungsverfahren ermöglicht. Auf Basis eines Werkstück-Datensatzes insbesondere mit Informationen über die Dimension und Anordnung der Bestandteile des Werkstücks 80 erstellt eine Datenverarbeitungseinheit 96 ein Bearbeitungsprogramm, wobei der Werkstück-Datensatz bevorzugt ein 3D-CAD-Datensatz ist, und wobei der Werkstück-Datensatz insbesondere durch einen Maschinenbediener über eine HMI-Schnittstelle 95 (Human Machine Interface) manuell eingegeben wird. Neben der manuellen Eingabe des Werkstück-Datensatzes kann der Werkstück-Datensatz bevorzugt auch über ein übergeordnetes Produktionsleitsystem an die Vorrichtung 10 übergeben werden.

Das Werkstück 80 ist bevorzugt ein Baumodul, welches insbesondere ein Wandelement, ein Deckenelement und/oder ein Dachelement ist, und welches bevorzugt für den industriellen Fertighausbau produziert wird. Das Bauelement erstreckt sich in der Längsrichtung bevorzugt im Bereich von 3000 mm bis 8000 mm, in der Querrichtung bevorzugt im Bereich von 2500 mm bis 3500 mm und in der Höhenrichtung bevorzugt im Bereich von 300 mm bis 600 mm. Das genannte Baumodul ist bevorzugt ein Holzrahmenelement und besteht aus unterschiedlichen Schichten, wobei das Holzrahmenelement insbesondere aus einer hölzernen Unterkonstruktion, aus Plattenmaterialien und aus Dämmmaterial besteht. Die hölzerne Unterkonstruktion ist bevorzugt ein Riegelwerk und weist insbesondere längliche Gurte und längliche Stiele auf, wobei die länglichen Gurte und länglichen Stiele insbesondere Holzbalken sind, die zusammengefügt beispielsweise einen rechteckigen Holzrahmen bilden. Das Werkstück 80 wird bevorzugt liegend auf der Auflagefläche 72 der Werkstückauflage 70 gelagert. Es ist jedoch auch möglich, dass das Werkstück 80 stehend auf der Auflagefläche 72 der Werkstückauflage 70 gelagert wird (bei entsprechender Länge der Ständer 36 der portalartigen Grundstruktur 55 oder bei der dann bevorzugten Verwendung eines Knickarmroboters als Bewegungseinheit). Das Plattenmaterial ist beidseitig auf dem Riegelwerk befestigt, wobei das Plattenmaterial entweder geschraubt, genagelt oder geklammert ist, und wobei das Plattenmaterial bevorzugt Holzfaserdämmplatten, Gipsplatten oder Holzwerkstoffplatten ist. Das Dämmmaterial wird in die Gefache des Riegelwerks entweder eingelegt oder eingeblasen, wobei das Dämmmaterial bevorzugt Mineralwolle, Polysterol oder Holzfaserdämmstoff ist. In einer besonderen Ausführungsform sind die Werkstücke 80 als Holztafelelemente oder Massivholzelemente ausgebildet.

Mittels der in Fig. 2 dargestellten Aufnahmeeinrichtung 43 der Bereitstellungseinheit 42 wird ein Aggregat 50 positionsgetreu bereitgestellt. Die Aufnahmeeinrichtung 43 umfasst zwei Aufnahmestellen, wobei eine erste Aufnahmestelle 43a an einer horizontal ausgerichteten Einstellplatte 44 angeordnet ist, und wobei eine zweite Aufnahmestelle 43b an einer vertikal ausgerichteten Aufnahmeplatte 49 angeordnet ist. Die erste Aufnahmestelle 43a weist zwei nach oben gerichtete kugelförmige Elemente auf, wobei die kugelförmigen Elemente zueinander definiert beabstandet sind und wobei die kugelförmigen Elemente bevorzugt auf der Oberseite der Einstellplatte 44 angeordnet sind. Die kugelförmigen Elemente sind in der Höhenrichtung einstellbar mit der Einstellplatte 44 verbunden, wobei bevorzugt jedes einzelne kugelförmige Element in der Höhenrichtung einstellbar ist. In der Höhenrichtung betrachtet hat die rechteckige Einstellplatte 44 zwei gabelzinkenartige Auswölbungen, wobei jeweils eines der kugelförmigen Elemente auf einer der gabelzinkenartigen Auswölbungen angeordnet ist. Der Freiraum zwischen den kugelförmigen Elementen erlaubt es, ein kollisionsfreies Aufnehmen oder Bereitstellen des Aggregats 50 zu gewährleisten. Die zweite Aufnahmestelle 43b ist eine rechteckige und nach oben offene Nut an einer oberen Kante der vertikalen Aufnahmeplatte 49, wobei die Nut in der Aufnahmeplatte 49 mit sogenannten Einlaufschrägen gestaltet ist, um bei einer Aufnahme des Aggregats 50 mögliche Abweichungen von SollPositionen des Aggregats 50 und dessen Lagerungseinrichtung 54 (siehe Fig. 3) zu kompensieren. Die zweite Aufnahmestelle 43b liegt in der Höhenrichtung betrachtet bevorzugt genau mittig zwischen den kugelförmigen Elementen der ersten Aufnahmestelle 43a, um das Aggregat 50 und dessen Lagerungseinrichtung 54 in senkrechter Richtung einführen zu können. Die beiden Elemente der ersten Aufnahmestelle 43a und die zweite Aufnahmestelle 43b der Bereitstellungseinheit 42 bilden zusammen eine sogenannte 3-Punkt-Aufnahme für das Aggregat 50, wobei das in der Lagerstation 40 gelagerte Aggregat 50 bevorzugt nur einen Freiheitsgrad in der Höhenrichtung hat, sodass das Aggregat 50 durch die Bewegungseinheit 20 aufgenommen oder abgelegt werden kann.

Der in Fig. 2 dargestellte Sensor 48 der Bereitstellungseinheit 42 ist in Bezug zur ersten Aufnahmestelle 43a bevorzugt einstellbar auf der horizontalen Einstellplatte 44 befestigt, wobei der Sensor 48 weiter bevorzugt, derart einstellbar ist, sodass der Abstand des Sensors 48 zur ersten Aufnahmestelle 43a eingestellt werden kann. Der Sensor 48 ist benachbart zur ersten Aufnahmestelle 43a angeordnet und ist dazu eingerichtet, Informationen über eine Belegung bzw. einen Aufnahmezustand der Bereitstellungseinheit 42 an die Steuereinheit 90 zu senden. Der Sensor 48 misst den Aufnahmezustand, wobei der Aufnahmezustand bevorzugt die folgenden zwei Zustände umfasst: 1. Zustand: Aggregat 50 in der Bereitstellungseinheit 42 aufgenommen. 2. Zustand: Aggregat 50 in der Bereitstellungseinheit 42 nicht aufgenommen.

Die in Fig. 2 dargestellte Einstellplatte 44 der Bereitstellungseinheit 42 ist am oberen Ende eines Halterblechs 45 bevorzugt einstellbar befestigt. An der Einstellplatte 44 sind die erste Aufnahmestelle 43a und der Sensor 48 angeordnet. Über einen Einstellmechanismus 42a ist die Einstellplatte 44 derart räumlich einstellbar, sodass die Aufnahmeeinrichtung 43 zur Aufnahme des Aggregats 50 exakt in der x-y-Ebene ausgerichtet werden kann. Insbesondere kann durch die Ausrichtung der Aufnahmeeinrichtung 43 ein Kupplungsadapter 57 (siehe Fig. 3) am Aggregat 50 ausgerichtet werden, sodass das Aggregat 50 durch die Aufnahmeeinheit 30 aufgenommen werden kann.

Das in Fig. 2 dargestellte Halterblech 45 der Bereitstellungseinheit 42 ist an dem Querträger 46 der portalförmigen Grundstruktur 41 der Lagerstation 40 lösbar befestigt. An dem Halterblech 45 sind die Einstellplatte 44 und die Aufnahmeplatte 49 angeordnet. Das Halterblech 45 ist bevorzugt formsteif ausgestaltet, um das Gewicht eines Aggregats 50 zu tragen, sodass das Aggregat 50 positionsgetreu aufnehmbar und lagerbar ist. Die formsteife Ausgestaltung wird beispielsweise durch zwei parallel angeordnete sich in der Höhenrichtung erstreckende Bleche realisiert, die am oberen Ende und seitlich jeweils durch ein Abstandsblech miteinander fest verbunden sind, insbesondere verschweißt sind.

Mittels der in Fig. 3 dargestellten Lagerungseinrichtung 54 des Aggregats 50 wird das Aggregat 50 positionsgetreu in der Lagerstation 40 zwischengelagert. Die Lagerungseinrichtung 54 besteht aus zwei Kopplungsstellen insbesondere zwei Aufhängungen, wobei eine erste Kopplungsstelle 54a an einer horizontalen ersten Platte 55b angeordnet ist, und wobei eine zweite Kopplungsstelle 54b an einer horizontalen zweiten Platte 55c angeordnet ist. Die erste Kopplungsstelle 54a besteht aus zwei vertikal ausgerichteten zylindrischen Elementen, wobei jedes zylindrische Element derart ausgebildet ist, um mit dem jeweiligen kugelförmigen Element der ersten Aufnahmestelle 43a der Aufnahmeeinrichtung 43 der Bereitstellungseinheit 42 formschlüssig ineinander zu greifen, wobei die zylindrischen Elemente bevorzugt auf einer Unterseite der ersten Platte 55b angeordnet sind. Ferner haben die zylindrischen Elemente der ersten Kopplungsstelle 54a einen definierten Abstand zueinander, wobei der Abstand der zylindrischen Elemente der ersten Kopplungsstelle 54a dem Abstand der kugelförmigen Elemente der erste Aufnahmestelle 43a der Aufnahmeeinrichtung 43 der Bereitstellungseinheit 42 entspricht, sodass das Aggregat 50 an der Lagerstation 40 zwischengelagert werden kann. Die zylindrischen Elemente sind in der Höhenrichtung einstellbar mit der ersten Platte 55b verbunden, wobei bevorzugt jedes einzelne zylindrische Element in der Höhenrichtung einstellbar ist. Die zweite Kopplungsstelle 54b ist ein quaderförmiges Element, welches lösbar mit der zweiten Platte 55c verbunden ist, wobei das quaderförmige Element derart ausgebildet ist, um mit der rechteckigen und nach oben offenen Nut der zweiten Aufnahmestelle 43b der Aufnahmeeinrichtung 43 der Bereitstellungseinheit 42 formschlüssig ineinander zu greifen, wobei das quaderförmige Element bevorzugt auf einer Oberseite der zweiten Platte 55c angeordnet ist.

Ein in Fig. 3 dargestellter Aggregatehalter 51 des Aggregats 50 ist in der Höhenrichtung beweglich an einer Grundstruktur 55 des Aggregats 50 gelagert, wobei der Aggregatehalter 51 bevorzugt als horizontale Platte ausgebildet ist. Der Aggregatehalter 51 weist auf der Unterseite eine mechanische Schnittstelle für die Einheit 52 auf, wobei an der mechanischen Schnittstelle bevorzugt die Einheit 52 mit einem Befestigungsmittel auswechselbar befestigt ist, wobei weiter bevorzugt das Befestigungsmittel eine Schraube oder ein Gewindebolzen ist. In einer bevorzugten Ausführungsform ist die mechanische Schnittstelle zwischen der Einheit 52 und dem Aggregatehalter 51 für alle in der Vorrichtung 10 eingesetzten Aggregate 50 vereinheitlicht, wobei die Einheit 52 bevorzugt eine glatte rechteckige Fläche mit einem Gewindebolzen aufweist, und wobei der Aggregatehalter 51 auf der Unterseite bevorzugt eine analoge glatte rechteckige Fläche mit einer länglichen Öffnung aufweist, sodass die Einheit 52 kraft- und formschlüssig mit dem Aggregatehalter 51 verbunden werden kann. Der Aggregatehalter 51 umfasst bevorzugt eine Einstellvorrichtung 58 für die Einheit 52, wobei mit der Einstellvorrichtung 58 die Einheit 52 in Bezug zu einer Mittelachse 59 des Aggregats 50 einstellbar ist. Durch die Einstellvorrichtung 58 wird insbesondere ein vordefinierter Raumbereich 53, in dem das Werkstück 80 durch die Einheit 52 prozessiert wird, zur Mittelachse 59 ausgerichtet. Unter dem vordefinierten Raumbereich 53 wird ein Bereich verstanden, in dem die Einheit 52 auf das Werkstück 80 einwirkt, insbesondere in dem ein Befestigungsmittel der Einheit 52 auf das Werkstück 80 trifft oder in dem Messignale einer Einheit 52 auf das Werkstück 80 treffen. Der vordefinierte Raumbereich 53 ist derart einzustellen, dass der vordefinierte Raumbereich 53 sich während eines Bearbeitungsprozesses in einer Linie mit der Mittelachse 59 befindet. Folglich stimmt die Position des vordefinierten Raumbereichs 53 mit der Position der Mittelachse 59 überein. In einer bevorzugten Ausführungsform weist die Einstellvorrichtung 58 eine Sicherungsplatte mit zumindest einem Befestigungsmittel auf. Mit der Sicherungsplatte und dem Befestigungsmittel ist die Einheit 52 innerhalb des Einstellbereichs derart sicherbar, sodass sich der vordefinierte Raumbereich 53 insbesondere während eines Bearbeitungsprozesses insbesondere auf Grund von Vibrationen nicht verändert. In den Ecken des Aggregatehalters 51 befinden sich bevorzugt vertikal ausgerichtete Öffnungen für Führungsstangen 55a. Insbesondere sind die Öffnungen für die Führungsstangen 55a über einen Klemmmechanismus klemmbar ausgestaltet, wobei die Klemmung bevorzugt über ein Befestigungsmittel erzeugt wird, sodass der Aggregatehalter 51 verklemmt wird und während eines Bearbeitungsprozesses gesichert ist.

**In** einer besonders bevorzugten Ausführungsform ist der Aggregatehalter 51 in der Höhenrichtung beweglich an der Grundstruktur 55 gelagert, wobei der Aggregatehalter 51 bevorzugt aus zwei parallelen Platten besteht, die übereinander angeordnet sind. Die beiden Platten sind über zumindest einen Linearaktuator insbesondere einen Pneumatikzylinder beweglich verbunden. Auf einer Unterseite der unteren horizontalen Platte ist wie im vorherigen Ausführungsbeispiel die mechanische Schnittstelle für die Einheit 52 angebracht. Der Pneumatikzylinder befindet sich zwischen der oberen horizontalen Platte und der unteren horizontalen Platte, wobei der Pneumatikzylinder bevorzugt an der oberen horizontalen Platte und an der unteren horizontalen Platte lösbar befestigt ist. **In** den Ecken der oberen und unteren horizontalen Platte befinden sich wie im vorherigen Ausführungsbeispiel bevorzugt vertikal ausgerichtete Öffnungen für die Führungsstangen 55a. Insbesondere sind in den vertikalen Öffnungen der unteren horizontalen Platte Kugelbuchsen verbaut, sodass die untere horizontale Platte reibungsarm bewegbar ist. Bevorzugt sind die vertikalen Öffnungen für die Führungsstangen 55a in der oberen horizontalen Platte wie in dem vorherigen Ausführungsbeispiel über einen Klemmmechanismus klemmbar ausgestaltet, sodass die obere horizontale Platte des Aggregatehalters 51 verklemmt werden kann. Während eines Bearbeitungsprozesses ist die obere horizontale Platte unbeweglich mit den Führungsstangen 55a verklemmt und die untere horizontale Platte ist über den Pneumatikzylinder reibungsarm bewegbar. Die Einheit 52 wird wie im vorherigen Ausführungsbeispiel an der mechanischen Schnittstelle der unteren horizontalen Platte angeordnet. Durch Aktivierung des Pneumatikzylinders kann die Einheit 52 zwei vordefinierte Positionen in der Höhenrichtung einnehmen. Die besonders bevorzugte Ausführungsform ist vorteilhaft, wenn es sich bei der Einheit 52 um eine Befestigungseinheit zum Eintreiben von Befestigungsmitteln handelt, wobei mit der Befestigungseinheit zum Eintreiben von Befestigungsmitteln zwei verschiedene Materialien mit unterschiedlicher Dichte bearbeitbar sind. Durch die zwei vordefinierten Positionen in der Höhenrichtung kann eine Eintreibtiefe der Befestigungsmittel bevorzugt automatisiert angepasst werden.

Mit der Einheit 52 wird das Werkstück 80 prozessiert, wie beispielsweise manipuliert und/oder vermessen, wobei die Einheit 52 über pneumatische und elektrische Leitungen sowie nicht dargestellte Steuerleitungen mit dem Kupplungsadapter 57 verbunden ist, sodass die Einheit 52 mit Energie versorgt werden kann und mit der Steuereinheit 90 kommunizieren kann. Die Einheit 52 ist beispielsweise eine Befestigungseinheit, eine Klebeeinheit, eine Fräseinheit mit eigenem Spindelantrieb, eine Sägeeinheit mit eigenem Spindelantrieb, eine Bohreinheit mit eigenem Spindelantrieb, eine Reinigungseinheit, eine Markierungseinheit und/oder eine Sensor- bzw. Vermessungseinheit. Mit der Befestigungseinheit sind bevorzugt Befestigungsmittel in das Werkstück 80 eintreibbar, wobei insbesondere Klammern, Nägel und Schrauben in das Werkstück 80 eintreibbar sind, sodass die Plattenmaterialien mit Befestigungsmitteln auf der hölzernen Unterkonstruktion befestigt werden können. Mit der Klebeeinheit wird beispielsweise ein Klebstoff auf das Werkstück 80 aufgetragen, wobei der Klebstoff insbesondere über eine Kartuschenpistole auf das Werkstück 80 extrudiert wird. Weiter bevorzugt kann der Klebstoff auch über ein sogenanntes Airless-Sprühsystem in geleichmäßiger Schichtdicke auf das Werkstück 80 aufgesprüht werden. Des Weiteren kann die Klebeeinheit bevorzugt auch als einer Abrollvorrichtung mit einer Abschneidevorrichtung für ein Klebeband ausgestalltet sein. Die Klebeeinheit trägt hierbei bevorzugt das Klebeband auf den Plattenmaterialien des Werkstücks auf, um beispielsweise die Plattenstöße der Plattenmaterialien auf dem Werkstück zu verkleben und/oder abzudichten. Insbesondere kann über die Abrollvorrichtung ein Klebeband, welches sich auf einem typischerweise runden Klebebandträger befindet, auf dem Werkstück aufgetragen werden. Bevorzugt kann mit der Abschneidevorrichtung das Klebeband nach dem Auftragen auf dem Werkstück abgeschnitten werden kann. Mit der Fräseinheit, der Sägeeinheit und der Bohreinheit wird das Werkstück 80 spanabhebend mit Werkzeugen bearbeitet, sodass in die Plattenmaterialien bevorzugt Öffnungen integriert werden können oder sodass die Plattenmaterialien weiter bevorzugt formatiert werden können. Mit der Reinigungseinheit werden die Werkstücke 80 gereinigt, wobei bevorzugt das Werkstück 80 mit Reinigungsbürsten und/oder Druckluft gereinigt wird, sodass das Werkstück 80 bevorzugt von Verschmutzungen und weiter bevorzugt von beispielsweise Spänen befreit wird. Mit der Markierungseinheit werden Markierungen auf dem Werkstück aufgebracht, die entweder dem Bediener eine Orientierung für manuelle Prozessschritte angibt oder womit überwacht werden kann, ob ein halbautomatischer oder vollautomatischer Prozessschritt tatsächlich an der vordefinierten Stelle ausgeführt wurde. Mit der Sensor- bzw. Vermessungseinheit kann der Zustand des Werkstücks 80 und/oder der Umgebung mittels einem Sensor überwacht werden, wobei der Sensor insbesondere ein optischer Sensor, ein Temperatursensor, ein Feuchtigkeitssensor oder ein Drucksensor ist, wobei der Sensor weiter bevorzugt, ein tastendender oder ein berührungsloser Sensor ist.

Die in Fig. 3 dargestellte Grundstruktur 55 des Aggregats 50 weist die erste Platte 55b, die zweite Platte 55c und die Führungsstangen 55a auf. Die erste Platte 55b, die bevorzugt horizontal ausgerichtet ist und eine im Wesentlichen rechteckige Form aufweist, bildet einen oberen Teil der Grundstruktur 55. Die zweite Platte 55c, die ebenfalls bevorzugt horizontal ausgerichtet ist und im Wesentlichen eine U-Form aufweist, bildet einen unteren Teil der Grundstruktur 55. Der obere Teil der Grundstruktur 55 ist über die Führungsstangen 55a mit dem unteren Teil der Grundstruktur 55 verbunden. Bevorzugt sind der obere Teil und der untere Teil der Grundstruktur 55 über vier runde Führungsstangen 55a miteinander verbunden. In einer weiteren bevorzugten Ausführungsform weist die Grundstruktur 55 zwei Führungsstangen 55a mit einer glatten und bevorzugt geschliffenen Oberfläche auf und zwei Führungsstangen 55a mit einem in der Höhenrichtung durchgängigen Außengewinde auf, sodass der Aggregatehalter 51 über die glatten Führungsstangen 55a in der Höhenrichtung geführt wird und über die Führungsstangen 55a mit Außengewinde in einer vordefinierten Höhenposition verklemmt wird.

Bevorzugt sind Stützräder 56 am unteren Teil der Grundstruktur 55 angeordnet, wobei weiter bevorzugt zumindest drei um eine vertikale Achse drehbar gelagerte Stützräder 56 an der Unterseite der zweiten Platte 55c der Grundstruktur 55 angeordnet sind. Bei einem Verwendungseinsatz des Aggregats 50 in der Bearbeitungsvorrichtung 10 haben die Stützräder 56 die Funktion, das zu prozessierende Werkstück 80 zur Prozessierung niederzuhalten und ein reibungsarmes Bewegen des Aggregats 50 über das Werkstück 80 zu gewährleisten. Die Art und Größe der Stützräder 56 sind je nach Material des zu prozessierenden Werkstücks 80 auszuwählen, um gegebenenfalls Abdrücke und Spuren auf der Oberfläche des Werkstücks 80 zu vermeiden. In einer bevorzugten Ausführungsform haben die Stützräder 56 einen Durchmesser von 50 mm - 80 mm mit einer gummierten Lauffläche, wobei die Lauffläche bevorzugt eine Breite von 20 mm - 40 mm hat. In einer alternativen Ausführungsform werden die Stützräder 56 durch eine auf der Unterseite glatte Gleitplatte, insbesondere eine Gleitplatte aus Kunststoff, ersetzt, um besonders empfindliche Materialien bearbeiten zu können. Besonders empfindliche Materialien sind insbesondere Holzfaserdämmplatten, deren Oberfläche nach der Bearbeitung durch die Bearbeitungsvorrichtung 10 keine Spuren und Abdrücke aufweisen darf.

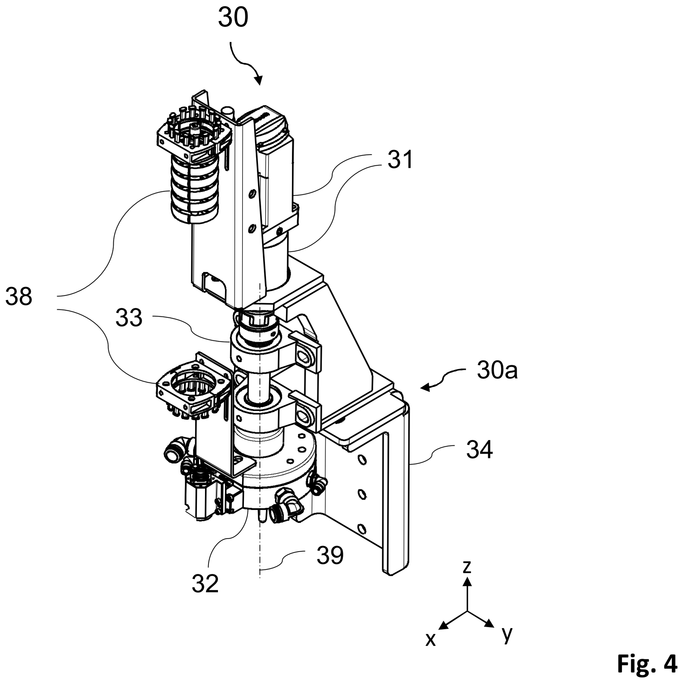

Der in Fig. 3 dargestellter Kupplungsadapter 57 ist am oberen Teil der Grundstruktur 55 angeordnet, wobei der Kupplungsadapter 57 insbesondere auf der Oberseite der ersten Platte 55b der Grundstruktur 55 angeordnet ist. Bevorzugt zu Servicezwecken ist die Kupplung lösbar auf der Oberseite der ersten Platte 55b der Grundstruktur 55 befestigt. Eine Mittelachse des bevorzugt zylinderförmigen Kupplungsadapters 57 definiert die Position der Mittelachse 59 des Aggregats 50. Der Kupplungsadapter 57 bildet zusammen mit einem Kupplungskopf 32 (siehe Fig. 4), der an der Aufnahmeeinheit 30 der Bewegungseinheit 20 angeordnet ist, ein Kupplungssystem, welches kraft- und formschlüssig über ein selbsthaltendes Verriegelungssystem verbindbar ist, sodass das Aggregat 50 mit der Aufnahmeeinheit 30 der Bewegungseinheit 20 gekoppelt werden kann. Über das Kupplungssystem kann Energie von der Bewegungseinheit 20 an das Aggregat 50 übertragen werden, wobei insbesondere pneumatische und elektrische Energie sowie elektrische Steuerimpulse an das Aggregat 50 übertragbar sind. In der entgegengesetzten Richtung können Messignale über das Kupplungssystem von dem Aggregat 50 an die Steuereinheit 90 übermittelt werden. Bei dem Kupplungsadapter 57 handelt es sich insbesondere um einen handelsübliche Kupplungsadapter 57 des Unternehmens Schunk, wobei die Art und Größe des Kupplungsadapters 57 auf die auf das Aggregat 50 einwirkenden Kräfte während des Verwendungseinsatzes des Aggregats 50 auszulegen sind.

Der in Fig. 3 dargestellter Sensor 60 ist am unteren Teil der Grundstruktur 55 angeordnet, wobei der Sensor 60 insbesondere auf einer Oberseite der zweiten Platte 55c der Grundstruktur 55 angeordnet ist. Der Sensor 60 ist bevorzugt ein handelsüblicher Distanzsensor zum Beispiel von der Firma SICK und überwacht in einem Betriebszustand den Kontakt des Aggregats 50 mit dem Werkstück 80. Der Sensor 60 überwacht insbesondere den Bereich unterhalb des vordefinierten Raumbereichs 53 der Einheit 52, sodass die Einheit 52 ohne Bestätigung des Sensors 60 zum Vorhandensein des Werkstücks 80 keine Bearbeitung durchführt. Der Sensor 60 ist mittels nicht dargestellter elektrischer Leitungen und Steuerleitungen mit dem Kupplungsadapter 57 verbunden ist, sodass der Sensor 60 mit Energie versorgt werden kann und mit der Steuereinheit 90 kommunizieren kann.

Der in Fig. 4 dargestellte Kupplungskopf 32 der Aufnahmeeinheit 30 bildet zusammen mit einer Antriebseinheit 31 und einer Drehvorrichtung 33 einen vertikal ausgerichteten Antriebsstrang, wobei der Kupplungskopf 32 am unteren Ende des vertikal ausgerichteten Antriebstrangs angeordnet ist, sodass der Kupplungskopf 32 um eine vertikale Drehachse 39 gedreht werden kann. Der Kupplungskopf 32 bildet den beweglichen Teil der Aufnahmeeinheit 30. Bevorzugt und zu Servicezwecken ist der Kupplungskopf 32 lösbar am unteren Teil der Drehvorrichtung 33 befestigt. Der Kopplungskopf bildet eine Schnittstelle zu dem Kupplungsadapter 57 des jeweiligen Aggregats 50, sodass, wie bereits in einem vorherigen Abschnitt beschrieben, eine kraft- und formschlüssige Verbindung zwischen dem Kupplungskopf 32 und dem Kupplungsadapter 57 hergestellt werden kann und folglich ein in der Lagerstation 40 gelagertes Aggregat 50 durch die Aufnahmeeinheit 30 aufgenommen oder abgelegt werden kann. Der Kupplungskopf 32 weist mehrere Energieübertragungsschnittstellen auf, sodass insbesondere elektrische und pneumatische Energie sowie Steuerimpulse von der Bewegungseinheit 20 an das jeweils eingekoppelte Aggregat 50 und umgekehrt von dem jeweiligen Aggregat 50 zu der Bewegungseinheit 20 Messignale übertragen werden können. Bei dem Kupplungskopf 32 handelt es sich insbesondere um einen handelsüblichen Kupplungskopf 32 des Unternehmens Schunk, wobei die Art und Größe des Kupplungskopfes 32 auf die auf das Aggregat 50 einwirkenden Kräfte während des Verwendungseinsatzes des Aggregats 50 auszulegen sind.

Eine in Fig. 4 dargestellte Halterstruktur 34 der Aufnahmeeinheit 30 besteht bevorzugt aus einem oberen Teil und einem unteren Teil, wobei bevorzugt der obere Teil und der untere Teil der Halterstruktur 34 durch einen Einstellmechanismus 30a miteinander verbunden sind. Die Halterstruktur 34 bildet den festen bzw. unbewegten Teil der Aufnahmeeinheit 30. Am oberen Teil der Halterstruktur 34 sind die Drehvorrichtung 33 und die Antriebseinheit 31 angeordnet, wobei bevorzugt die Drehvorrichtung 33 und die Antriebseinheit 31 lösbar befestigt angeordnet sind. Der untere Teil der Halterstruktur 34 ist am Aggregateträger 21 der Bewegungseinheit 20 angeordnet, wobei bevorzugt der untere Teil der Halterstruktur 34 lösbar am Aggregateträger 21 der Bewegungseinheit 20 befestigt ist. Durch den Einstellmechanismus 30a ist der obere Teil der Halterstruktur 34 derart räumlich einstellbar, um den Kupplungskopf 32 in einer x-y-Ebene exakt auszurichten, sodass das Aggregat 50 durch die Aufnahmeeinheit 30 aufgenommen werden kann. Der Einstellmechanismus 30a umfasst bevorzugt mehrere Einstellschrauben, wobei die Einstellschrauben weiter bevorzugt sogenannte Zug-Druck-Schrauben sind.

Die in Fig. 4 dargestellte Antriebseinheit 31 weist einen Elektromotor mit Getriebe auf, wobei insbesondere die Antriebseinheit 31 einen Servomotor in Kombination mit einem Planetengetriebe aufweist. Die Drehachse einer Abtriebswelle des Planetengetriebes ist vertikal angeordnet, wobei die Drehachse der Abtriebswelle des Planetengetriebes die Drehachse 39 des vertikalen Antriebsstrangs definiert. Durch den Servomotor mit Planetengetriebe ist während des Verwendungseinsatzes des Aggregats 50 eine präzise Positionierungs- und Bewegungssteuerung möglich. Insbesondere dreht und positioniert die Antriebseinheit 31 den Kupplungskopf 32 über eine Wellenverbindungskupplung und eine Kraftübertragungswelle. Ein Planetengetriebe bietet den Vorteil, dass hohe Drehmomente bei kleinem Platzbedarf übertragen werden können. Bei dem Servomotor mit Planetengetriebe handelt es sich insbesondere um einen handelsüblichen Servomotor mit Planetengetriebe beispielsweise von dem Unternehmen REXROTH, wobei der Servomotor mit Planetengetriebe auf, die auf das Aggregat 50 einwirkenden Kräfte während des Verwendungseinsatzes des Aggregats 50 auszulegen sind.

Die in Fig. 4 dargestellte Drehvorrichtung 33 ist an einer Seitenfläche der Halterstruktur 34 angeordnet. Die Drehvorrichtung 33 weist eine Wellenverbindungskupplung, eine Kraftübertragungswelle und eine Lagerung auf. Die Lagerung lagert die Kraftübertragungswelle drehbar an der Halterstruktur 34 und positioniert die Kraftübertragungswelle in einer Linie mit der Abtriebswelle des Planetengetriebes, sodass eine rotatorische Bewegungsenergie von der Antriebseinheit 31 auf den Kupplungskopf 32 übertragen werden kann.

Über eine in Fig. 4 dargestellte Energiekette 38 werden Energieübertragungsleitungen von der Bewegungseinheit 20 an die Aufnahmeeinheit 30 geführt. Insbesondere werden elektrische Leitungen, pneumatische Leitungen und Steuerleitungen über die Energiekette 38 geführt. Um Leitungen an den Energieübertragungsschnittstellen des Kupplungskopfes 32 anschließen zu können, werden die Leitungen bevorzugt von dem festen Teil der Aufnahmeeinheit 30 (Halterstruktur 34) zu dem beweglichen Teil (Kupplungskopf 32) der Aufnahmeeinheit 30 über die Energiekette 38 verlegt, sodass die Leitungen zur Übertragung der elektrischen und pneumatischen Energie definiert gelagert sind und somit die Leitungen während einer Positionierungsbewegung des Kupplungskopfes 32 nicht beschädigt werden.

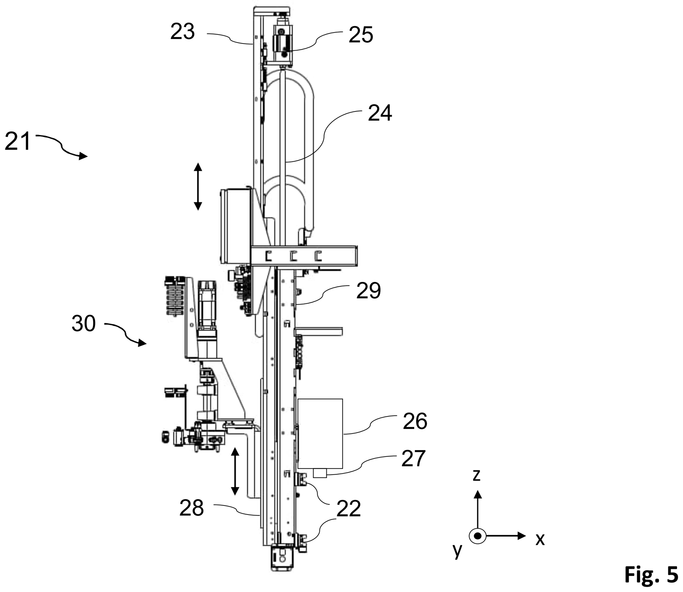

Eine in Fig. 5 dargestellte Führungseinheit 22 des Aggregateträgers 21 ist an einem zweiten Schlitten 29 des Aggregateträgers 21 lösbar befestigt angeordnet. Die Führungseinheit 22 besteht aus mindestens einem Führungselement, insbesondere aus zwei Führungselementen, die an einer Seitenfläche des zweiten Schlittens 29 in der Höhenrichtung übereinander angeordnet sind. Besonders bevorzugt sind an der Seitenfläche des zweiten Schlittens 29 vier Führungselemente angebracht, wobei die vier Führungselemente in einem rechteckigen Muster übereinander und nebeneinander angeordnet sind. Bevorzugt liegen die zwei oberen Führungselemente in der gleichen x-y-Ebene und die zwei unteren Führungselemente in der gleichen x-y-Ebene, sodass die oberen Führungselemente mit einer oberen Führungsschiene des Führungssystems des Führungsbalkens 35 der Bewegungseinheit 20 interagiert und die unteren Führungselemente mit einer unteren Führungsschiene des Führungssystems des Führungsbalkens 35 interagiert. Folglich ist durch das Führungssystem am Führungsbalken 35 und die Führungseinheit 22 am Aggregateträger 21 der Aggregareträger derart gelagert, dass dieser in der Querrichtung eine lineare Bewegung durchführen kann.

An einem in Fig. 5 dargestellten ersten Schlitten 23 des Aggregateträgers 21 ist die Aufnahmeeinheit 30 angeordnet, wobei die Aufnahmeeinheit 30 in der Höhenrichtung verschiebbar am ersten Schlitten 23 angeordnet ist. Bevorzugt erstreckt sich der erste Schlitten 23 in der Höhenrichtung im Bereich von 1300 mm - 1500 mm und in der Querrichtung im Bereich von 200 mm - 300 mm. Zur Verschiebung der Aufnahmeeinheit 30 in der Höhenrichtung ist die Aufnahmeeinheit 30 bevorzugt über eine vertikale Führungsleiste 28 am ersten Schlitten 23 verschiebbar angeordnet. Insbesondere kann die Aufnahmeeinheit 30 mit Befestigungsmitteln an unterschiedlichen Befestigungspositionen an der vertikalen Führungsleiste 28 verschoben und befestigt werden. Die Befestigungspositionen erstrecken sich im Bereich von 400 mm bis 600 mm an der vertikalen Führungsleiste 28. Die Verschiebung der Aufnahmeeinheit 30 kann sowohl manuell aber auch bevorzugt motorisch erfolgen. Über wiederum ein Führungssystem ist der erste Schlitten 23 des Aggregateträgers 21 am zweiten Schlitten 29 des Aggregateträgers 21 verschiebbar angeordnet. Insbesondere ist am ersten Schlitten 23 bevorzugt eine vertikal ausgerichtete Führungsschiene angeordnet, wobei weiter bevorzugt am ersten Schlitten 23 zwei parallele und vertikal ausgerichtete Führungsschienen angeordnet sind. Bevorzugt befinden sich die zwei Führungsschienen an einer zur Höhenrichtung parallelen Seitenfläche des ersten Schlittens 23 und liegen nebeneinander in der gleichen z-y-Ebene. Auf einer Seitenfläche des zweiten Schlittens 29, welche dem ersten Schlitten 23 zugewandt ist, ist ein Führungselement oder sind bevorzugt mehrere Führungselemente angeordnet. Die Führungselemente sind Teil des Führungssystems zwischen dem ersten und dem zweiten Führungsschlitten zur Verschiebung des ersten Schlittens 23 in der Höhenrichtung. Bevorzugt liegen die Führungselemente nebeneinander in der gleichen z-y-Ebene. Insbesondere erstreckt sich der zweite Schlitten 29 in der Höhenrichtung im Bereich von 800 mm - 1000 mm und in der Querrichtung im Bereich von 200 mm - 300 mm.

Eine in Fig. 5 dargestellte erste Antriebseinheit 24 besteht aus einem festen Antriebsteil und einem beweglichen Antriebsteil, wobei der feste Antriebsteil an dem zweiten Schlitten 29 lösbar befestigt ist und wobei der bewegliche Antriebsteil an dem ersten Schlitten 23 lösbar befestigt ist, sodass der erste Schlitten 23 durch die erste Antriebseinheit 24 in der Höhenrichtung verschoben werden kann. Der maximale Verschiebungsweg des ersten Schlittens 23 durch die erste Antriebseinheit 24 liegt bevorzugt im Bereich von 600 mm und weiter bevorzugt im Bereich von 700 mm. Bevorzugt handelt es sich bei der ersten Antriebseinheit 24 um eine pneumatisch betriebene Antriebseinheit 24 und weiter bevorzugt um einen Pneumatikzylinder. Die erste Antriebseinheit 24 erzeugt mit dem festen Antriebsteil (einem Zylindergehäuse) und dem beweglichen Antriebsteil (einem Kolben mit einer Stange) eine lineare Bewegung, wobei der Kolben mit der Stange beweglich in dem Zylindergehäuse gelagert ist, um die pneumatische Energie in eine lineare mechanische Bewegungsenergie umzuwandeln. Der Kolben mit der Stange weist am äußersten Ende der Stange eine Befestigungsvorrichtung auf, sodass die Stange mit dem ersten Schlitten 23 verbunden werden kann. Das Zylindergehäuse weist ebenfalls eine Befestigungsvorrichtung auf, sodass das Zylindergehäuse mit dem zweiten Schlitten 29 verbunden werden kann. Es versteht sich, dass auch eine hydraulisch betriebene Antriebseinheit 24 oder eine elektrisch betriebene Antriebseinheit 24 zur Verschiebung des ersten Schlittens 23 eingesetzt werden kann. Die erste Antriebseinheit 24 dient dem Zweck, dass an der Aufnahmeeinheit 30 gekoppelte Aggregat 50 in der Höhenrichtung in eine obere Endlage und in eine untere Endlage zu bewegen. Die untere Endlage entspricht bevorzugt der zu bearbeitenden Werkstückoberfläche. Zum Erreichen der unteren Endlage wird das Aggregat 50 durch die erste Antriebseinheit 24 in Richtung des Werkstücks 80 bewegt, sodass die Stützräder 56 des Aggregats 50 auf dem Werkstück 80 aufsetzen. Folglich halten die Stützräder 56 das Werkstück 80 nieder und ein reibungsarmes Verfahren des Aggregats 50 über das Werkstück 80 wird gewährleistet. Durch eine Anbindung der ersten Antriebseinheit 24 an die Steuereinheit 90 kann bevorzugt der Druck, mit dem die Stützräder 56 des Aggregats 50 das Werkstück 80 niederhalten, automatisch reguliert werden. Weiter bevorzugt, kann durch eine zusätzliche Vorrichtung der bewegliche Teil der pneumatisch betriebenen Antriebseinheit 24 nach dem Aufsetzten der Stützräder 56 auf dem Werkstück 80 mechanisch geklemmt werden, sodass das Aggregat 50 nach dem Aufsetzten der Stützräder 56 auf dem Werkstück 80 in einer bestimmten Höhe fixiert werden kann. In einer besonderen Ausführungsform kann der erste Schlitten 23 mit dem Aggregat 50 durch eine weitere zusätzliche Vorrichtung mechanisch von dem beweglichen Antriebsteil der pneumatisch betriebenen Antriebseinheit 24 entkoppelt werden, um diesen in einem Bereich von bevorzugt 40 mm schwimmend zu lagern, sodass das Aggregat 50 auch über unebene also an der Oberseite nicht plane Werkstücke 80 verfahren werden kann.

In einer bevorzugten Ausführungsform ist zwischen dem beweglichen Antriebsteil der ersten Antriebseinheit 24 und dem ersten Schlitten 23 eine zusätzliche Hubeinheit 25 integriert, sodass der erste Schlitten 23 in der Höhenrichtung weiter angehoben werden kann. Bevorzugt handelt es sich bei der zusätzlichen Hubeinheit 25 um eine pneumatisch betriebene Hubeinheit 25. Ein Vorteil der zusätzlichen Hubeinheit 25 ist, dass das Aggregat 50 in einem Bearbeitungszustand kurzzeitig vom Werkstück 80 angehoben werden kann und wieder auf das Werkstück 80 abgesenkt werden kann. Bevorzugt kann das Aggregat 50 mit der zusätzlichen Hubeinheit 25 im Bereich von 100 mm bis weiter bevorzugt 200 mm angehoben werden. Somit können beispielsweise Hindernisse auf der Oberfläche, insbesondere Öffnungen in der Oberfläche des Werkstücks 80, durch kurzzeitiges Anheben und Absenken überfahren werden. Ein kurzzeitiges Anheben und Absenken mit der zusätzlichen Hubeinheit 25 sind derart vorteilhaft, um Hindernisse schnell zu überfahren, um somit ein schnelles Fortsetzten der Bearbeitung zu gewährleisten.

Eine in Fig. 5 dargestellte zweite Antriebseinheit 26 des Aggregateträgers 21 ist am zweiten Schlitten 29 angeordnet, wobei die zweite Antriebseinheit 26 bevorzugt an einer Seitenfläche des zweiten Schlittens 29 einstellbar befestigt ist. Die zweite Antriebseinheit 26 ist bevorzugt oberhalb der Führungseinheit 22 angeordnet. Mit der zweiten Antriebseinheit 26 kann der Aggregateträger 21 eine in der Querrichtung lineare Bewegung entlang des Führungsbalkens 35 der Bewegungseinheit 20 ausführen. Die zweite Antriebseinheit 26 ist bevorzugt ein elektrischer Motor oder weiter bevorzugt ein elektrischer Servomotor. Durch den Einsatz des elektrischen Servomotors ist während eines Verwendungseinsatzes eine präzise Positionierungs- und Bewegungssteuerung möglich. Es versteht sich, dass die zweite Antriebseinheit 26 auch als ein pneumatischer oder hydraulischer Motor ausgeführt sein kann, wobei des Weiteren auch Motoren mit Getriebe zum Einsatz kommen können. Bevorzugt ist an der zweiten Antriebseinheit 26 ein in der x-y-Ebene liegendes Zahnrad 27 angeordnet, sodass das Zahnrad 27 mit einer in Querrichtung verlaufenden und an der portalförmigen Grundstruktur 15 angeordneten Zahnstange in Eingriff gebracht werden kann und der Aggregateträger 21 bewegt werden kann. Um das Zahnrad 27 optimal mit der Zahnstange in Eingriff zu bringen, ist die zweite Antriebseinheit 26 bevorzugt auf einer Einstellvorrichtung angeordnet. Mit der Einstellvorrichtung kann die zweite Antriebseinheit 26 in der Höhenrichtung und der Längsrichtung eingestellt werden. Weiter bevorzugt beinhaltet die Einstellvorrichtung eine Federvorrichtung. Bevorzugt erlaubt die Federvorrichtung eine federnde Bewegung der zweiten Antriebseinheit 26 in der Längsrichtung, und weiter bevorzugt erlaubt die Federvorrichtung auch eine federnde Bewegung um die Querrichtung. Somit kann eine mögliche fehlerhafte Geradheit der Zahnstange und/oder eine mögliche fehlerhafte Position des Zahnrades 27 durch die Federvorrichtung ausgeglichen werden kann, um bei einem Verwendungseinsatz einen Verschleiß der Kontaktflächen des Zahnrades 27 und der Zahnstange zu minimieren. Die zweite Antriebseinheit 26 wird ferner von der Bewegungseinheit 20 mit Energie versorgt, wobei die zweite Antriebseinheit 26 bevorzugt über elektrische Leitungen mit elektrischer Energie versorgt wird. Des Weiteren ist die zweite Antriebseinheit 26 über Steuerleitungen 91 mit der Steuereinheit 90 verbunden, um mit der Steuereinheit 90 zu kommunizieren.

Sowohl die Steuerleitungen 91 am Aggregateträger 21 als auch die elektrischen, die pneumatischen und die hydraulischen Leitungen zur Energieversorgung aller elektrischen, pneumatischen und hydraulischen Verbraucher am Aggregateträger 21 verlaufen bevorzugt über eine oder mehrere Energieketten von der Bewegungseinheit 20 an den Aggregateträger 21. Am Aggregateträger 21 selbst, verlaufen die genannten Leitungen ebenfalls über eine oder mehrere Energieketten vom ersten Schlitten 23 an den zweiten Schlitten 29.

In Fig 6. sind von der Vorrichtung 10 für eine bessere Übersicht nur die Bewegungseinheit 20 und die Lagerstation 40 in einer schematischen Darstellung dargestellt. Es ist außerdem sowohl ein oberes Höhenprofil 86 der Lagerstation 40 als auch ein unteres Höhenprofil 85 der Bewegungseinheit 20 dargestellt. Eine derartige Ausgestaltung der Lagerstation entspricht dem ersten Höhenprofil der Lagerstation, welches bereits in einem vorherigen Abschnitt beschrieben wurde. Es ist erkennbar, dass die Bewegungseinheit 20 und die Lagerstation 40 derart ausgestaltet und angeordnet sind, dass das obere Höhenprofil 86 der Lagerstation 40 unterhalb des unteren Höhenprofils 85 der Bewegungseinheit 20 in der z-y-Ebene verläuft.

Das obere Höhenprofil 86 der Lagerstation 40 ist eine erste Profillinie, welche die maximale Ausdehnung der Lagerstation 40 in der Höhenrichtung widerspiegelt. Insbesondere verläuft die erste Profillinie in der Querrichtung entlang der Oberkante des Querträgers 46 der Lagerstation 40 und umschließt ferner ein oberhalb der Oberkante des Querträgers 46 verlaufendes Profil aller darüber herausragender Bauteile, wobei insbesondere die Bereitstellungseinheiten 42 und die Aggregate 50 über die Oberkante des Querträgers 46 der Lagerstation 40 herausragen.

Das untere Höhenprofil 85 der Bewegungseinheit 20 ist eine in der Querrichtung verlaufende zweite Profillinie, wobei die zweite Profillinie entlang der Unterkante des Führungsbalkens 35 verläuft und die untere Ausdehnung des Führungsbalkens 35 und der Aufnahmeeinheit 30 mit einem gekoppelten Aggregat 50 in der Höhenrichtung widerspiegelt. Obwohl sich die Aufnahmeeinheit 30 mit einem gekoppelten Aggregat 50 in einer oberen Endlage befindet, kann das Aggregat 50 unter der Unterkante des Führungsbalkens 35 der Bewegungseinheit 20 herausragen. Insbesondere wird die zweite Profillinie durch ein Profil in der z-y-Ebene aller im Bereich der Quererstreckung der Lagerstation 40 unter der Unterkante des Führungsbalkens 35 herausragender Bauteile bestimmt.

Folglich ist in Fig. 6 eine Anordnung zu erkennen, wobei das obere Höhenprofil 86 der Lagerstation 40 unter dem unteren Höhenprofil 85 der Bewegungseinheit 20 liegt, sodass die Bewegungseinheit 20 in einem Betriebszustand über die Lagerstation 40 hinweg fahren kann. Besonders vorteilhaft ist eine derartige Anordnung, wenn zwei in Längsrichtung nebeneinander angeordnete Werkstücke 80 von einer Bewegungseinheit 20 prozessiert werden sollen. Die Lagerstation 40 wird in diesem Fall zwischen den zwei Werkstücken 80 angeordnet, wobei die Bewegungseinheit 20 mit Aggregaten 50 beide Werkstücke 80 zur Prozessierung erreichen kann und bei Bedarf die Aggregate 50 an der Lagerstation 40 austauschen kann.

In Fig. 7 sind von der Vorrichtung 10 für eine bessere Übersicht nur die Bewegungseinheit 20, die Lagerstation 40 und die Werkstückauflage 70 in einer schematischen Darstellung dargestellt. Es ist außerdem sowohl ein unteres Höhenprofil 87 der Lagerstation 40 als auch ein Prozessierungsraum 88 dargestellt. Eine derartige Ausgestaltung der Lagerstation entspricht dem zweiten Höhenprofil der Lagerstation, welches bereits in einem vorherigen Abschnitt beschrieben wurde. Es ist erkennbar, dass die Lagerstation 40 derart ausgestaltet und angeordnet ist, dass das untere Höhenprofil 87 der Lagerstation 40 oberhalb des Prozessierungsraums 88 in der z-y-Ebene verläuft. Das untere Höhenprofil 87 der Lagerstation 40 ist eine in der Querrichtung verlaufende dritte Profillinie, wobei die dritte Profillinie entlang der Unterkante des Querträgers 46 verläuft und die untere Ausdehnung des Querträgers 46 in der Höhenrichtung widerspiegelt.

Der Prozessierungsraum 88 ist ein Raum für ein auf der Werkstückauflage 70 angeordnetes Werkstück 80, wobei sich der Prozessierungsraum 88 bevorzugt oberhalb der Werkstückauflage 70 befindet und das größtmögliche Werkstück 80 insbesondere in einer vertikalen Ausdehnung widerspiegelt. Eine Grundfläche des Prozessierungsraums 88 entspricht den Dimensionen in der Längsrichtung und in der Querrichtung der Auflagefläche 72 der Werkstückauflage 70. Die Ausdehnung des Prozessierungsraums 88 in der Höhenrichtung entspricht der vordefinierten maximalen Höhe, die ein Werkstück 80 haben darf.

Folglich ist in Fig. 7 eine Anordnung zu erkennen, wobei das untere Höhenprofil 87 der Lagerstation 40 über dem Prozessierungsraums 88 liegt, sodass das Werkstück 80 in einem Betriebszustand unter der portalförmigen Grundstruktur 41 der Lagerstation 40 hindurch transportiert werden kann. Besonders vorteilhaft ist eine derartige Anordnung bei längeren Produktionslinien, wobei ein Werkstück 80 von einer Vorrichtung zur Prozessierung von Werkstücken zu einer nächsten Vorrichtung zur Prozessierung von Werkstücken transportiert wird. In einer derartigen Produktionslinie können mehrere Bewegungseinheiten 20 und mehrere Lagerstationen 40 in Längsrichtung hintereinander angeordnet sein, wobei die einzelnen Bewegungseinheiten 20 nur einen begrenzten Fahrbereich haben und bevorzugt nur eine Lagerstation 40 oder eine begrenzte Anzahl der vorhandenen Lagerstationen 40 erreichen können. Insbesondere bei zeitlich schnell getakteten Produktionslinien mit großen Produktionsmengen ist eine derartige Anordnung sinnvoll.

Wie die Fig. 8a bis 8c zeigen, kann die Lagerstation 40 an unterschiedlichen Positionen innerhalb der für die Vorrichtung 10 vorgesehenen Aufstellfläche angeordnet werden. Insbesondere sind neun Anordnungsvarianten der Lagerstation 40 vorteilhaft, sodass die Position der Lagerstation 40 auf unterschiedliche kundenspezifische Anforderungen angepasst werden kann.

Eine erste Anordnungsvariante 97a, in der die Lagerstation 40 in der Längsrichtung neben den Fahrprofilen 66 und in Querrichtung innerhalb der Fahrprofile 66 angeordnet ist, eignet sich besonders gut, um die Lagerstation 40 innerhalb eines Arbeitsbereichs des Portals oder des Knickarmroboters besonders einfach erreichbar zu positionieren. Das Portal mit der Aufnahmeeinheit 30 kann über die Lagerstation 40 verfahren werden, um das jeweilige Aggregat 50 aufzunehmen. Die Ortsangabe "neben den Fahrprofilen 66" bedeutet, dass sich die Lagerstation 40 in der Längsrichtung auf einer Position befindet, wo die Fahrprofile 66 verlaufen.

Eine zweite Anordnungsvariante 97b, in der die Lagerstation 40 neben einer gedachten Verlängerung der Fahrprofile 66 und in Querrichtung innerhalb der Fahrprofile 66 angeordnet ist, eignet sich besonders gut, um den Arbeitsbereich des Portals oder des Knickarmroboters für besonders große Werkstücke 80 freizuhalten. Insbesondere wenn in Querrichtung außerhalb der Fahrprofile 66 wenig Platz für eine Lagerstation 40 vorhanden ist. Ein Knickarmroboter könnte die derart positionierte Lagerstation 40 durch den großen Bewegungsradius seines Roboterarms einfach erreichen. Die Aufnahmeeinheit 30 des Portals müsste derart gestaltet sein, um die Lagerstation 40 und die darin gelagerten Aggregate 50 zu erreichen. Insbesondere müsste die Aufnahmeeinheit 30 derart gestaltet sein, dass sie sich in Längsrichtung bewegen kann und durch eine dementsprechende Bewegungsfunktion in Längsrichtung ein Aggregat 50 erreichen kann. Neben der gedachten Verlängerung der Fahrprofile 66 bedeutet, dass sich die Lagerstation 40 in der Längsrichtung auf einer Position befindet, wo keine Fahrprofile 66 verlaufen.

Eine dritte Anordnungsvariante 97c, in der die Lagerstation 40 in Längsrichtung neben den Fahrprofilen 66 und in Querrichtung außerhalb der Fahrprofile 66 angeordnet ist, eignet sich besonders gut, um den Arbeitsbereich eines Portals oder eines Knickarmroboters für besonders große Werkstücke 80 freizuhalten. Insbesondere wenn in einer gedachten Verlängerung der Fahrprofile 66 in der Längsrichtung wenig Platz für eine Lagerstation 40 vorhanden ist. Ein Knickarmroboter könnte die derart positionierte Lagerstation 40 durch den großen Bewegungsradius seines Roboterarms einfach erreichen. Die Aufnahmeeinheit 30 des Portals und/oder das Portal selbst müsste derart gestaltet sein, um die Lagerstation 40 und die darin gelagerten Aggregate 50 zu erreichen. Insbesondere müsste der Führungsbalken 35 des Portals in der Querrichtung ausladend gestaltet sein, um die Erreichbarkeit durch die Aufnahmeeinheit 30 zu gewährleisten.

Die weiteren Anordnungsvarianten sind dadurch gekennzeichnet, dass die Lagerstation 40 in Längsrichtung sowohl neben den Fahrprofilen 66 als auch neben einer gedachten Verlängerung der Fahrprofile 66 und in Querrichtung innerhalb der Fahrprofile 66 angeordnet ist, dass die Lagerstation 40 in Längsrichtung entweder neben den Fahrprofilen 66 oder neben einer gedachten Verlängerung der Fahrprofile 66 oder sowohl neben den Fahrprofilen 66 als auch neben einer gedachten Verlängerung der Fahrprofile 66 und in Querrichtung zumindest mit einem der Fahrprofile überlappt, oder dass die Lagerstation 40 in Längsrichtung neben den Fahrprofilen 66 oder sowohl neben den Fahrprofilen 66 als auch neben einer gedachten Verlängerung der Fahrprofile 66 und in Querrichtung außerhalb der Fahrprofile 66 angeordnet ist.

In den Fig. 9a und 9b ist die bereits in Bezug zur Fig. 1 beschriebene Antriebseinheit 37 für einen Vorschub der Bewegungseinheit 20 in der Längsrichtung detailliert dargestellt. Die Antriebseinheit 37 ist bevorzugt als sogenannter Omega-Antrieb ausgelegt und besteht im Wesentlichen aus zwei Antriebsrollen 100, zwei Motoren 101, zwei Kraftübertragungsmitteln 102, vier Bewegungsmitteln 103 und vier Umlenkrollen 104, wobei die Antriebsrollen 100, die Motoren 101, die Kraftübertragungsmittel 102 und die Bewegungsmittel 103 bevorzugt jeweils gleich ausgebildet sind. Die beiden Antriebsrollen 100 und die beiden Motoren 101 der Antriebseinheit 37 sind in der gezeigten Ausführungsform im Führungsbalken 35 der Bewegungseinheit 20 angeordnet, wobei die Antriebsrollen 100 bevorzugt um eine zur Querrichtung parallelen Achse drehbar im Führungsbalken 35 gelagert sind und mit dem jeweiligen Motor 101 mechanisch verbunden sind. Die Antriebsrollen 100 sind bevorzugt zylindrisch ausgebildet und weisen eine verzahnte Struktur auf der zylindrischen Oberfläche auf. Die beiden Motoren 101 sind bevorzugt lösbar am Führungsbalken 35 befestigt und übertragen über bevorzugt jeweils eine Antriebswelle eine rotatorische Bewegungsenergie an die Antriebsrollen 100. Die Motoren 101 sind bevorzugt elektrische Motor mit einem Getriebe, wobei die Motoren 101 weiter bevorzugt elektrische Servomotoren sind, die über Steuerleitungen 91 mit der Steuereinheit 90 verbunden sind. Der elektrische Servomotor bietet im Gegensatz zu anderen Motorentypen die Vorteile, dass die Bewegungseinheit 20 in einem Betriebszustand sehr präzise und genau positioniert werden kann und schnell auf Steuersignale der Steuereinheit 90 reagieren kann.

Die Bewegungsmittel 103 der Antriebseinheit 37 sind in den jeweiligen Stützen 36 der Bewegungseinheit 20 angeordnet, wobei die Bewegungsmittel 103 bevorzugt um eine zur Querrichtung parallelen Achse drehbar in den jeweiligen Stützen 36 gelagert sind, sodass die Bewegungsmittel 103 die Last der Bewegungseinheit 20 tragen können und die Bewegungseinheit 20 auf den Fahrprofilen 66 beweglich gelagert ist. Das jeweilige Bewegungsmittel 103 weist eine Lauffläche auf, wobei das Bewegungsmittel 103 bevorzugt zwei ballige Laufflächen aufweist, sodass der Kontakt zum Fahrprofil 66 auf ein Minimum reduziert wird und folglich die Reibung zwischen dem Fahrprofil 66 und dem Bewegungsmittel 103 minimiert wird. Die Umlenkrollen 104 sind ebenfalls in den jeweiligen Stützen 36 angeordnet, wobei die Umlenkrollen 104 bevorzugt um eine zur Querrichtung parallelen Achse drehbar in den jeweiligen Stützen 36 gelagert sind, sodass das jeweilige Kraftübertragungsmittel 102 von der Antriebsrolle 100 zum Fahrprofil 66 umgelenkt werden kann. Wie in Fig. 9a dargestellt, ist ein Kraftübertragungsmittel 102, insbesondere ein Flachriemen mit einer verzahnten Struktur auf der Oberfläche, an den beiden Enden des jeweiligen Fahrprofils 66 über Befestigungspunkte bevorzugt einstellbar befestigt. Das Kraftübertragungsmittel 102 kann insbesondere über die Befestigungspunkte gespannt werden, sodass eine Zugkraft aufgebaut werden kann und somit eine Verbindung zwischen der Antriebseinheit 37 und dem Fahrprofil 66 entsteht. Der Flachriemen mit einer verzahnten Struktur auf der Oberfläche verläuft von den Enden des jeweiligen Fahrprofils 66 horizontal entlang des Fahrprofils 66 bis zu den Umlenkrollen 104 und wird dann durch die Umlenkrollen 104 in vertikaler Richtung zu der Antriebsrolle 100 umgelenkt, sodass die verzahnte Struktur des Flachriemens mit der verzahnten Struktur der Antriebsrolle 100 in Eingriff gebracht werden kann, um die rotatorische Bewegungsenergie des Motors 101 in eine lineare Bewegungsenergie umzuwandeln und somit die Bewegungseinheit 20 in lineare Längsbewegung zu versetzen. Um die Bewegungseinheit 20 in eine gleichmäßige und symmetrische lineare Längsbewegung zu versetzten und somit zum einen eine genaue Bearbeitung der Werkstücke 80 durch die Bearbeitungsvorrichtung 10 zu garantieren und zum anderen die Bewegungseinheit 20 möglichst präzise in einer Übergabeposition zu positionieren, bei der Aggregate 50 aus der Lagerstation 40 aufgenommen oder in die Lagerstation 40 abgelegt werden können, sind die beiden Kraftübertragungsmittel 102 bevorzugt über die Befestigungspunkte der beiden Fahrprofile 66 mit der gleichen Zugkraft gespannt und die Motoren 101 der Antriebseinheit 37 sind von der Steuereinheit 90 bevorzugt gleichartig angesteuert. In einer bevorzugten Ausführungsform weist die Antriebseinheit 37 nur einen Motor 101 auf, wobei der eine Motor 101 durch die Steuereinheit 90 angesteuert wird und die rotatorische Bewegungsenergie des Motors 101 über eine Antriebswelle an die beiden Antriebsrollen 100 übertragen wird.

Nach einer weiteren Ausführungsform der Vorrichtung 10 ist das Aggregat 50 zur Prozessautomatisierung drehbar an der Aufnahmeeinheit 30 gelagert, wobei insbesondere das Aggregat 50 zur Prozessautomatisierung um eine zur Höhenrichtung parallele Achse derart drehbar gelagert ist, so dass ein vordefinierter Raumbereich 53, in dem das Werkstück 80 durch das Aggregat 50 zur Prozessautomatisierung prozessiert werden soll, unverändert bleibt.

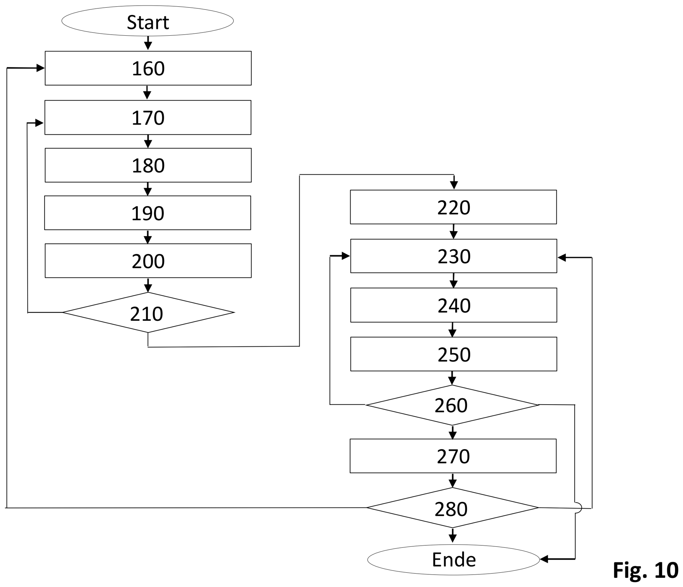

Fig. 10 zeigt eine schematische Darstellung eines Verfahrens zum Aufnehmen oder Ablegen eines Aggregats zur Prozessautomatisierung, wie beispielsweise das Aggregat 50, aus einer Lagerstation bzw. in einer Lagerstation, wie beispielsweise der Lagerstation 40 der Vorrichtung 10, die in den vorangehenden Absätzen in verschiedensten Varianten beschrieben ist. Ein derartiger Wechselvorgang ist dadurch gekennzeichnet, dass eine Bewegungseinheit, wie beispielsweise die Bewegungseinheit 20, sich auf die Lagerstation zubewegt, die Bewegungseinheit nach dem Erreichen der Lagerstation zumindest ein Aggregat ablegt oder aufnimmt und anschließend die Bewegungseinheit sich wieder zu einer Bearbeitungsposition für die weitere Bearbeitung des bereits bearbeiteten Werkstücks 80 oder eines neu zu bearbeitenden Werkstücks 80 begibt. Eine erneute Bewegung der Bewegungseinheit zu der Lagerstation ist bereits Bestandteil eines weiteren Wechselvorgangs.

Bei dem Verfahren werden insbesondere die Aggregate zur Prozessautomatisierung bei einem ersten Wechselvorgang von der Aufnahmeeinheit aus Bereitstellungseinheiten, wie beispielsweise den Bereitstellungseinheiten 42, aufgenommen und bei einem zweiten oder weiteren Wechselvorgang wieder in die Bereitstellungseinheiten abgelegt. Im nun beschriebenen Verfahrensbeispiel sind als Ausgangsbasis zwei Aufnahmeeinheiten an der Bewegungseinheit angeordnet, wobei in beiden Aufnahmeeinheiten jeweils ein Aggregat gekoppelt ist. Ferner sind in der Lagerstation zwei Aggregate gelagert, die für die Bearbeitung des Werkstücks 80 aufgenommen werden sollen.

In einem ersten Verfahrensschritt 160 bewegt sich die Bewegungseinheit in der Längsrichtung zur Lagerstation und erreicht eine durch die Steuereinheit vorgegebene erste Soll-Übergabekoordinate. In einem zweiten Verfahrensschritt 170 bewegt sich die erste Aufnahmeeinheit in der Querrichtung zur Lagerstation und erreicht eine durch eine Steuereinheit, wie beispielsweise die Steuereinheit 90, vorgegebene zweite Soll-Übergabekoordinate. In einem dritten Verfahrensschritt 180 bewegt sich die erste Aufnahmeeinheit in der Höhenrichtung zur Lagerstation von einer oberen Endlage in eine durch die Steuereinheit vorgegebene dritte Soll-Übergabekoordinate. Damit hat die erste Aufnahmeeinheit eine Soll-Übergabeposition erreicht. Die Soll-Übergabeposition stellt die Position dar, in der sich die jeweilige Aufnahmeeinheit derart benachbart zur Lagerstation befindet, dass ein Aggregat zur Prozessautomatisierung beispielsweise durch einen Kopplungsvorgang ohne weitere Bewegung der Aufnahmeeinheit aufgenommen oder einen Entkopplungsvorgang ohne weitere Bewegung der Aufnahmeeinheit abgelegt werden kann. Je nach Vorpositionierung der Aufnahmeeinheit aufgrund eines zuvor beendeten Bearbeitungsprozesses könnte auch nur einer der Schritte 160 bis 180 oder könnten zwei der Schritte 160 bis 180 ausreichen, um die Soll-Übergabeposition zu erreichen.

In einem weiteren Verfahrensschritt 190 entkoppelt die erste Aufnahmeeinheit das gekoppelte Aggregat zur Prozessautomatisierung und legt damit das Aggregat zur Prozessautomatisierung ab. Der Schritt 190 kann zwei Teilschritte enthalten, bei dem zunächst die zwischen der Aufnahmeeinheit und dem Aggregat zur Prozessautomatisierung bestehenden Versorgungs- und Signalleitungen unterbrochen werden und anschließend die zwischen der Aufnahmeeinheit und dem Aggregat zur Prozessautomatisierung bestehende kraft- und/oder formschlüssige Verbindung aufgehoben wird. Alternativ könnten die beiden Teilschritte auch in einem Schritt durchgeführt werden.

Anschließend wird in einem weiteren ggf. optionalen Schritt 200 der Abstand zwischen der Lagerstation und der ersten Aufnahmeeinheit durch eine Relativbewegung in der Höhenrichtung vergrößert. Dies kann beispielsweise dadurch geschehen, dass die erste Aufnahmeeinheit in der Höhenrichtung zurück in eine obere Endlage verfährt. Der Schritt 200 erfolgt in solchen Fällen, bei denen eine direkte Bewegung in der Querrichtung und/oder Längsrichtung zu einer weiteren Bereitstellungseinheit aufgrund der Ausgestaltung der Lagerstation nicht ohne Kollision mit der Lagerstation möglich ist. Auf den Schritt 200 kann bei entsprechender Gestaltung der Lagerstation aber auch verzichtet werden. In einem weiteren Verfahrensschritt 210 überprüft die Steuereinheit, ob alle notwendigen Aggregate zur Prozessautomatisierung für die folgenden Bearbeitungsschritte aufgenommen oder abgelegt wurden. In diesem Beispiel entscheidet die Steuereinheit, dass ein Aggregat zur Prozessautomatisierung durch die erste Aufnahmeeinheit aufgenommen werden soll und somit das Verfahren bzw. der laufende Wechselvorgang mit dem Verfahrensschritt 170 fortgesetzt wird.

In einem weiteren Verfahrensschritt 170 bewegt sich die erste Aufnahmeeinheit in der Querrichtung in Bezug zur Lagerstation und erreicht eine durch die Steuereinheit vorgegebene weitere zweite Soll-Übergabekoordinate. In einem weiteren Verfahrensschritt 180 bewegt sich die erste Aufnahmeeinheit in der Höhenrichtung zur Lagerstation von einer oberen Endlage in eine durch die Steuereinheit vorgegebene weitere dritte Soll-Übergabekoordinate. In einem weiteren Verfahrensschritt 190 koppelt die erste Aufnahmeeinheit das von der Steuereinheit vorgegebene in der Lagerstation befindliche Aggregat zur Prozessautomatisierung und nimmt damit das Aggregat zur Prozessautomatisierung auf. Der Schritt 190 kann auch hier zwei Teilschritte enthalten, bei dem zunächst eine kraft- und/oder formschlüssige Verbindung zwischen der Aufnahmeeinheit und dem Aggregat zur Prozessautomatisierung hergestellt und anschließend die Versorgungs- und Signalleitungen von der Aufnahmeeinheit und dem Aggregat zur Prozessautomatisierung miteinander verbunden werden. Alternativ könnten die beiden Teilschritte auch hier in einem Schritt durchgeführt werden. Anschließend wird in einem weiteren ggf. optionalen Schritt 200 der Abstand zwischen der Lagerstation und der ersten Aufnahmeeinheit durch eine Relativbewegung in der Höhenrichtung vergrößert. Dies kann beispielsweise dadurch realisiert werden, dass die erste Aufnahmeeinheit in der Höhenrichtung zurück in eine obere Endlage verfährt.

In einem weiteren Verfahrensschritt 210 überprüft die Steuereinheit erneut, ob alle notwendigen Aggregate zur Prozessautomatisierung für die folgenden Bearbeitungsschritte aufgenommen oder abgelegt wurden. In diesem Beispiel entscheidet die Steuereinheit, dass ein Aggregat zur Prozessautomatisierung durch die zweite Aufnahmeeinheit abgelegt werden soll und somit wird das Verfahren erneut mit Verfahrensschritt 170 fortgesetzt. Dabei bewegt sich die zweite Aufnahmeeinheit in der Querrichtung in Bezug zur Lagerstation und erreicht eine durch die Steuereinheit vorgegebene weitere zweite Soll-Übergabekoordinate. In einem weiteren Verfahrensschritt 180 bewegt sich die zweite Aufnahmeeinheit in der Höhenrichtung zur Lagerstation von einer oberen Endlage in eine durch die Steuereinheit vorgegebene weitere dritte Soll-Übergabekoordinate. In einem weiteren Verfahrensschritt 190 analog zu der obigen Beschreibung entkoppelt die zweite Aufnahmeeinheit das gekoppelte Aggregat zur Prozessautomatisierung und legt es ab. Anschließend wird in einem weiteren ggf. optionalen Schritt 200 der Abstand zwischen der Lagerstation und der zweiten Aufnahmeeinheit durch eine Relativbewegung in der Höhenrichtung vergrößert. Dies kann beispielsweise dadurch realisiert werden, dass die zweite Aufnahmeeinheit in der Höhenrichtung zurück in eine obere Endlage verfährt. In einem weiteren Verfahrensschritt 210 überprüft die Steuereinheit, ob alle notwendigen Aggregate zur Prozessautomatisierung für die folgenden Bearbeitungsschritte aufgenommen oder abgelegt wurden. In diesem Beispiel entscheidet die Steuereinheit, dass ein Aggregat zur Prozessautomatisierung durch die zweite Aufnahmeeinheit aufgenommen werden soll und somit wird das Verfahren erneut mit Verfahrensschritt 170 fortgesetzt.

In einem weiteren Verfahrensschritt 170 bewegt sich die zweite Aufnahmeeinheit in der Querrichtung in Bezug zur Lagerstation und erreicht eine durch die Steuereinheit vorgegebene weitere zweite Soll-Übergabekoordinate. In einem weiteren Verfahrensschritt 180 bewegt sich die zweite Aufnahmeeinheit in der Höhenrichtung zur Lagerstation von einer oberen Endlage in eine durch die Steuereinheit vorgegebene weitere dritte Soll-Übergabekoordinate. In einem weiteren Verfahrensschritt 190 koppelt die zweite Aufnahmeeinheit analog zu der obigen Beschreibung das weitere vorgegebene in der Lagerstation befindliche Aggregat zur Prozessautomatisierung und nimmt es auf. Anschließend wird in einem weiteren ggf. optionalen Schritt 200 der Abstand zwischen der Lagerstation und der zweiten Aufnahmeeinheit durch eine Relativbewegung in der Höhenrichtung vergrößert. Dies kann beispielsweise dadurch realisiert werden, dass die zweite Aufnahmeeinheit in der Höhenrichtung zurück in eine obere Endlage verfährt. In einem weiteren Verfahrensschritt 210 überprüft die Steuereinheit erneut, ob alle notwendigen Aggregate zur Prozessautomatisierung für die folgenden Bearbeitungsschritte aufgenommen oder abgelegt wurden. In diesem Beispiel entscheidet die Steuereinheit, dass kein weiteres Aggregat zur Prozessautomatisierung mehr aufgenommen oder abgelegt werden soll und somit wird das Verfahren mit Verfahrensschritt 220 fortgesetzt.

In einem weiteren Verfahrensschritt 220 wird das Werkstück 80 auf einer Werkstückauflage, wie beispielsweise der Werkstückauflage 70, zur Bearbeitung bereitgestellt. Der Verfahrensschritt 220 kann alternativ übergangen werden, falls sich das Werkstück 80 bereits auf der Werkstückauflage befindet, insbesondere wenn es nach dem Wechselvorgang weiter prozessiert werden soll. In einem weiteren Verfahrensschritt 230 bewegt sich die Bewegungseinheit in der Längsrichtung in Bezug zum Werkstück 80 und erreicht eine durch die Steuereinheit vorgegebene erste Soll-Prozessierungskoordinate. In einem weiteren Verfahrensschritt 240 bewegt sich die erste Aufnahmeeinheit in der Querrichtung in Bezug zum Werkstück 80 und erreicht eine durch die Steuereinheit vorgegebene zweite Soll-Prozessierungskoordinate. In einem weiteren Verfahrensschritt 250 bewegt sich die erste Aufnahmeeinheit in der Höhenrichtung in Bezug zum Werkstück 80 von einer oberen Endlage in eine durch die Steuereinheit vorgegebene dritte Soll-Prozessierungskoordinate. Mittels der Verfahrensschritte 230 bis 250 erreicht die erste Aufnahmeeinheit eine Soll-Prozessierungsposition. Die Soll-Prozessierungsposition stellt die Position dar, in der sich die jeweilige Aufnahmeeinheit benachbart zum Werkstück befindet und eine Prozess in Bezug auf das Werkstück 80 durchgeführt werden kann.

In einem Verfahrensschritt 260 wird mittels eines Sensors, beispielsweise des Sensors 60, überprüft, ob sich im vordefinierten Raumbereich 53 wie vorgesehen, das Werkstück 80 befindet. Falls die Überprüfung das Ergebnis liefert, dass sich kein Werkstück 80 in dem Raumbereich 53 befindet, wird entweder das Verfahren mit Verfahrensschritt 230 fortgeführt oder das Verfahren bricht ab und ein Bediener müsste die Fehlerursache ergründen. Falls die Überprüfung hingegen das Ergebnis liefert, dass sich das Werkstück 80 wie erwartet in dem Raumbereich 53 befindet, wird in einem weiteren Verfahrensschritt 270 das Werkstück 80 durch das erste Aggregat zur Prozessautomatisierung nach Vorgabe des Bearbeitungsprogramms prozessiert. In einem weiteren Verfahrensschritt 280 überprüft die Steuereinheit, ob alle möglichen Bearbeitungsschritte mit den an einem Aggregateträger, wie beispielsweise dem Aggregateträger 21, befindlichen Aggregaten zur Prozessautomatisierung durchgeführt wurden. Falls dem nicht so ist, entscheidet die Steuereinheit, dass das Verfahren mit allen oder einigen der Verfahrensschritte 230 bis 270 an der gleichen Soll-Bearbeitungsposition oder einer weiteren Soll-Bearbeitungsposition fortgesetzt wird.

In einem weiteren Verfahrensschritt 280 überprüft die Steuereinheit erneut, ob alle möglichen Bearbeitungsschritte mit den am Aggregateträger befindlichen Aggregaten zur Prozessautomatisierung durchgeführt wurden. Falls dem so ist, entscheidet die Steuereinheit, dass keine weiteren Bearbeitungsschritte am Werkstück 80 notwendig sind und beendet somit das Verfahren oder setzt das Verfahren mit Schritt 160 fort, falls ein weiterer Wechselvorgang für Aggregate zur Prozessautomatisierung erforderlich ist.

Um die Soll-Übergabeposition und die Soll-Bearbeitungsposition bevorzugt noch schneller zu erreichen, können sowohl die Verfahrensschritte 160 und 170 als auch die Verfahrensschritte 230 und 240 gleichzeitig ausgeführt werden. Weiter bevorzugt können sowohl die Verfahrensschritte 160 und 170 und 180 als auch die Verfahrensschritte 230 und 240 und 250 gleichzeitig ausgeführt werden.

Außerdem können auch mehrere Aufnahmeeinheiten die Verfahrensschritte 170 und 180 und 190 und 200 gleichzeitig ausführen, um gleichzeitig zwei oder mehr Aggregate zur Prozessautomatisierung aus der Lagerstation aufzunehmen oder abzulegen. Dazu weisen bevorzugt sowohl die Drehachsen der Aufnahmeeinheiten am Aggregateträger als auch die Bereitstellungseinheiten der Lagerstation in der Querrichtung den gleichen Abstand auf. Des Weiteren können auch mehrere Aufnahmeeinheiten die Verfahrensschritte 240 und 250 und 260 und 270 gleichzeitig ausführen, um gleichzeitig ein Werkstück 80 zu bearbeiten.

### Bezugszeichenliste

10 Vorrichtung zur Prozessierung von Werkstücken
15 Grundstruktur von Bewegungseinheit
20 Bewegungseinheit
21 Aggregateträger
22 Führungseinheit
23 erster Schlitten
24 erste Antriebseinheit
25 zusätzliche Hubeinheit
26 zweite Antriebseinheit
27 Zahnrad
28 Führungsleiste
29 zweiter Schlitten
30 Aufnahmeeinheit
30a Einstellmechanismus
31 Antriebseinheit
32 Kupplungskopf
33 Drehvorrichtung
34 Halterstruktur
35 Führungsbalken
36 Stütze
37 Antriebseinheit
38 Energiekette
39 Drehachse
40 Lagerstation
41 Grundstruktur von Lagerstation
42 Bereitstellungseinheit
42a Einstellmechanismus
43 Aufnahmeeinrichtung
43a erste Aufnahmestelle
43b zweite Aufnahmestelle
44 Einstellplatte
45 Halterblech
46 Querträger
47 Ständer
48 Sensor
49 Aufnahmeplatte
50 Aggregat zur Prozessautomatisierung
51 Aggregatehalter
52 Einheit
53 vordefinierter Raumbereich
54 Lagerungseinrichtung
54a erste Kopplungsstelle
54b zweite Kopplungsstelle
55 Grundstruktur vom Aggregat zur Prozessautomatisierung
55a Führungsstange
55b erste Platte
55c zweite Platte
56 Stützrad
57 Kupplungsadapter
58 Einstellvorrichtung
59 Mittelachse
60 Sensor
65 Tragstruktur
66 Fahrprofil
70 Werkstückauflage
71 Basis
72 Auflagefläche
73 Spannsystem
74 Transportsystem
75 Messsystem
80 Werkstück
85 unteres Höhenprofil der Bewegungseinheit
86 oberes Höhenprofil der Lagerstation
87 unteres Höhenprofil der Lagerstation
88 Prozessierungsraum
90 Steuereinheit
91 Steuerleitung
95 HMI-Schnittstelle
96 Datenverarbeitungseinheit
97a erste Anordnungsvariante
97b zweite Anordnungsvariante
97c dritte Anordnungsvariante
100 Antriebsrolle
101 Motor
102 Kraftübertragungsmittel
103 Bewegungsmittel
104 Umlenkrolle
160 Durchführen einer ersten Relativbewegung in der Längsrichtung zwischen der Bewegungseinheit und der Lagerstation zum Erreichen einer vordefinierten Übergabeposition
170 Durchführen einer zweiten Relativbewegung in der Querrichtung zwischen der Aufnahmeeinheit und der Lagerstation zum Erreichen einer vordefinierten Übergabeposition
180 Durchführen einer dritten Relativbewegung in der Höhenrichtung zwischen der Aufnahmeeinheit und der Lagerstation zum Erreichen einer vordefinierten Übergabeposition
190 Koppeln und/oder Entkoppeln des Aggregats zur Prozessautomatisierung durch die Aufnahmeeinheit in der Übergabeposition
200 Vergrößerung des Abstandes zwischen der Lagerstation und der Aufnahmeeinheit durch eine Relativbewegung in der Höhenrichtung
210 Überprüfen, ob die für die Bearbeitung notwendigen Aggregate zur Prozessautomatisierung aufgenommen wurden
220 Bereitstellen eines Werkstücks auf der Werkstückauflage
230 Durchführen einer ersten Relativbewegung in der Längsrichtung zwischen der Bewegungseinheit und dem Werkstück zum Erreichen der Bearbeitungsposition
240 Durchführen einer zweiten Relativbewegung in der Querrichtung zwischen der Aufnahmeeinheit und dem Werkstück zum Erreichen der Bearbeitungsposition
250 Durchführen einer dritten Relativbewegung in der Höhenrichtung zwischen der Aufnahmeeinheit und dem Werkstück zum Erreichen der Bearbeitungsposition
260 Überprüfen, ob sich das Werkstück im vordefinierten Raumbereich befindet
270 Prozessieren des Werkstücks an der Bearbeitungsposition durch das Aggregat zur Prozessautomatisierung
280 Überprüfen, ob alle notwendigen Bearbeitungsschritte am Werkstück ausgeführt wurden

## Patentansprüche

1. Vorrichtung (10) zur Prozessierung von Werkstücken (80), insbesondere von Holzrahmenelementen oder dergleichen, umfassend eine in Längsrichtung der Vorrichtung (10) verfahrbare Bewegungseinheit (20) für ein Aggregat (50) zur Prozessautomatisierung, **dadurch gekennzeichnet, dass** die Vorrichtung (10) ferner eine insbesondere in Bezug auf die Längsrichtung der Vorrichtung (10) und eine zur Längsrichtung senkrechte Querrichtung der Vorrichtung (10) stationäre Lagerstation (40) mit einer Bereitstellungseinheit (42) zum Bereitstellen des Aggregats (50) zur Prozessautomatisierung umfasst, dass die Bewegungseinheit (20) eine Aufnahmeeinheit (30) umfasst, und dass die Bewegungseinheit (20) eingerichtet ist, eine vordefinierte Übergabeposition in Bezug zu der Lagerstation (40) einzunehmen und das Aggregat (50) zur Prozessautomatisierung mit der Aufnahmeeinheit (30) bevorzugt automatisiert aus der Lagerstation (40) aufzunehmen oder bevorzugt automatisiert in die Lagerstation (40) abzulegen.

2. Vorrichtung (10) nach Anspruch 1, wobei die Vorrichtung (10) eine Tragstruktur (65) umfasst, die sich entlang der Längsrichtung der Vorrichtung (10) erstreckt und an der die Bewegungseinheit (20) zum Verfahren entlang der Tragstruktur (65) beweglich gelagert ist, wobei die Aufnahmeeinheit (30) an der Bewegungseinheit (20) in der Querrichtung der Vorrichtung (10) und in einer zur Längsrichtung und zur Querrichtung senkrechten Höhenrichtung in Bezug zur Lagerstation (40) beweglich gelagert ist.

3. Vorrichtung (10) nach Anspruch 2, wobei die Tragstruktur (65) in Form zweier parallel verlaufender in Längsrichtung ausgerichteter Fahrprofile (66) gestaltet ist, und wobei die Lagerstation (40) zumindest nach einer der folgenden Varianten angeordnet ist:
- In der Längsrichtung überlappend mit den Fahrprofilen (66) und/oder überlappend mit einer gedachten Verlängerung der Fahrprofile (66), und
- In der Querrichtung überlappend mit mindestens einem Fahrprofil (66) oder innerhalb der Fahrprofile (66) oder außerhalb der Fahrprofile (66).

4. Vorrichtung (10) nach einem der vorhergehenden Ansprüche, wobei die Lagerstation (40) mit dem Aggregat (50) zur Prozessautomatisierung in der Querrichtung ein oberes Höhenprofil aufweist und wobei die Bewegungseinheit (20) mit dem Aggregat (50) zur Prozessautomatisierung in der Querrichtung ein unteres Höhenprofil aufweist, welches wenigstens abschnittsweise über dem Höhenprofil der Lagerstation (40) liegt.

5. Vorrichtung (10) nach einem der vorhergehenden Ansprüche, wobei die Vorrichtung (10) ferner eine Werkstückauflage (70) umfasst, wobei oberhalb der Werkstückauflage (70) ein Prozessierungsraum (88) für ein auf der Werkstückauflage (70) angeordnetes zu prozessierendes Werkstück (80) vorgesehen ist, wobei der Prozessierungsraum (88) in der Querrichtung ein oberes Höhenprofil aufweist, und wobei die Lagerstation (40) mit dem Aggregat (50) zur Prozessautomatisierung in der Querrichtung ein unteres Höhenprofil aufweist, welches wenigstens abschnittsweise über dem oberen Höhenprofil des Prozessierungsraums (88) angeordnet ist.

6. Vorrichtung (10) nach einem der Ansprüche 2 bis 5, wobei die Lagerstation (40) die Bereitstellungseinheit (42) und zumindest eine weitere Bereitstellungseinheit (42) aufweist, und wobei die Bereitstellungseinheit (42) und die zumindest eine weitere Bereitstellungseinheit (42) in der Querrichtung voneinander beabstandet sind, und wobei insbesondere die Bereitstellungseinheit (42) und zumindest eine weitere Bereitstellungseinheit (42) insbesondere gemeinsam oder einzeln in der Höhenrichtung verstellbar ausgestaltet sind, wobei die Vorrichtung mindestens zwei Aggregate (50) zur Prozessautomatisierung umfasst, wobei ein erstes der mindestens zwei Aggregate (50) zur Prozessautomatisierung eine erste Lagerungseinrichtung (54) aufweist, wobei ein zweites der mindestens zwei Aggregate (50) zur Prozessautomatisierung eine zweite Lagerungseinrichtung (54) aufweist, wobei die Bereitstellungseinheit (42) der Lagerstation (40) mindestens eine Aufnahmeeinrichtung (43) für die erste Lagerungseinrichtung (54) und die zweite Lagerungseinrichtung (54) aufweist, wobei die zumindest eine weitere Bereitstellungseinheit (42) der Lagerstation (40) mindestens eine weitere Aufnahmeeinrichtung (43) für die erste Lagerungseinrichtung (54) und die zweite Lagerungseinrichtung (54) aufweist, wobei insbesondere die erste Lagerungseinrichtung (54) und die zweite Lagerungsreinrichtung (54) unterschiedlich oder einheitlich ausgebildet sind, und wobei insbesondere die Aufnahmeeinrichtung (43) und die mindestens eine weitere Aufnahmeeinrichtung unterschiedlich oder einheitlich ausgebildet sind.

7. Vorrichtung (10) nach einem der vorhergehenden Ansprüche, wobei das Aggregat (50) zur Prozessautomatisierung eine Einheit (52) zur Prozessierung und insbesondere mindestens zwei Einheiten (52) zur Prozessierung des Werkstücks (80) umfasst, die insbesondere an einem Aggregatehalter (51) des Bearbeitungsaggregats (50) höhenverstellbar und/oder auswechselbar befestigt ist, wobei die Einheit (52) und insbesondere die mindestens zwei Einheiten (52) aus der folgenden Gruppe ausgewählt ist bzw. sind: Befestigungseinheit, Klebeeinheit, Fräseinheit, Sägeeinheit, Bohreinheit, Reinigungseinheit, Markierungseinheit, Sensor- bzw. Vermessungseinheit.

8. Vorrichtung (10) nach einem der vorhergehenden Ansprüche, wobei die Bereitstellungseinheit (42) und/oder die Aufnahmeeinheit (30) durch je einen manuellen, halbautomatisch oder vollautomatischen Einstellmechanismus (30a, 42a) in der Höhenrichtung und/oder in der Querrichtung und/oder in der Längsrichtung und/oder um die Höhenrichtung und/oder um die Querrichtung und/oder um die Längsrichtung verstellbar ist bzw. sind.

9. Vorrichtung (10) nach einem der vorhergehenden Ansprüche, wobei die Vorrichtung (10) zum Verfahren und Positionieren der Bewegungseinheit (20) relativ zu der Lagerstation (40) einen Omega-Antrieb (37) umfasst.

10. Verfahren zum Aufnehmen oder Ablegen eines Aggregats (50) zur Prozessautomatisierung aus einer Lagerstation (40) bzw. in die Lagerstation (40), insbesondere bei einer Vorrichtung (10) nach einem der Ansprüche 1 bis 9, **dadurch gekennzeichnet, dass** das Verfahren die folgenden Schritte umfasst:
- Durchführen (160) einer ersten Relativbewegung in einer Längsrichtung zwischen einer Bewegungseinheit (20) und der Lagerstation (40) zum Erreichen einer vordefinierten Übergabeposition und/oder
- Durchführen (170) einer zweiten Relativbewegung in einer Querrichtung zwischen einer Aufnahmeeinheit (30) und der Lagerstation (40) zum Erreichen der vordefinierten Übergabeposition, und/oder
- Durchführen (180) einer dritten Relativbewegung in einer Höhenrichtung zwischen der Aufnahmeeinheit (30) und der Lagerstation (40) zum Erreichen der vordefinierten Übergabeposition, und
- Aufnehmen oder Ablegen (190) des Aggregats (50) zur Prozessautomatisierung an der Bewegungseinheit (20) oder in die Lagerstation (40) in der Übergabeposition.

11. Verfahren nach Anspruch 10, ferner umfassend die weiteren Schritte:
- Durchführen (230) einer ersten Relativbewegung in der Längsrichtung zwischen der Bewegungseinheit (20) und einem Werkstück (80) zum Erreichen einer Prozessierungsposition, und/oder
- Durchführen (240) einer zweiten Relativbewegung in der Querrichtung zwischen der Aufnahmeeinheit (30) und dem Werkstück (80) zum Erreichen der Prozessierungsposition, und/oder
- Durchführen (250) einer dritten Relativbewegung in der Höhenrichtung zwischen der Aufnahmeeinheit (30) und dem Werkstück (80) zum Erreichen der Prozessierungsposition und
- Prozessieren (270) des Werkstücks (80) an der Prozessierungsposition durch das Aggregat (50) zur Prozessautomatisierung.

12. Verfahren nach Anspruch 10 oder 11, wobei die erste Relativbewegung in der Längsrichtung zwischen der Bewegungseinheit (20) und der Lagerstation (40) und die zweiten Relativbewegung in der Querrichtung zwischen der Aufnahmeeinheit (30) und der Lagerstation (40) gleichzeitig ausgeführt werden oder wobei die erste Relativbewegung in der Längsrichtung zwischen der Bewegungseinheit (20) und der Lagerstation (40), die zweite Relativbewegung in der Querrichtung zwischen der Aufnahmeeinheit (30) und der Lagerstation (40) und die dritte Relativbewegung in der Höhenrichtung zwischen der Aufnahmeeinheit (30) und der Lagerstation (40) gleichzeitig ausgeführt werden.

13. Verfahren nach einem der Ansprüche 10 bis 12, wobei die erste Relativbewegung in der Längsrichtung zwischen der Bewegungseinheit (20) und der Lagerstation (40) derart ausgeführt wird, sodass die Bewegungseinheit (20) über die Lagerstation (40) hinwegfährt.

14. Verfahren nach einem der Ansprüche 10 bis 13, wobei entweder eine Werkstückauflage (70) mit einem auf einer Werkstückauflage (70) angeordneten und insbesondere von der Bearbeitungsvorrichtung (10) fertig bearbeiteten Werkstück (80) unter der Lagerstation (40) hindurchfährt oder das Werkstück (80) wird mit einer auf der Werkstückauflage (70) angeordneten Transportsystem (74) unter der Lagerstation (40) hindurchtransportiert, wobei die Werkstückauflage (70) selbst in Bezug zur Lagerstation (40) stationär ist.

15. Verfahren nach einem der Ansprüche 10 bis 14, wobei mehrere Aggregate (50) zur Prozessautomatisierung in einem Wechselvorgang der Bearbeitungsvorrichtung (10) sequenziell oder gleichzeitig aus der Lagerstation (40) aufgenommen oder abgelegt werden.
